(19) Europäisches Patentamt
European Patent Office
Office européen des brevets

(11) **EP 2 052 053 B1**

(12) **FASCICULE DE BREVET EUROPEEN**

(45) Date de publication et mention
de la délivrance du brevet:
**26.04.2017 Bulletin 2017/17**

(21) Numéro de dépôt: **07787737.1**

(22) Date de dépôt: **19.07.2007**

(51) Int Cl.:
*C09K 11/77* (2006.01)     *H01J 61/44* (2006.01)
*B01J 14/00* (2006.01)     *C09K 11/02* (2006.01)

(86) Numéro de dépôt international:
**PCT/EP2007/057480**

(87) Numéro de publication internationale:
**WO 2008/012266 (31.01.2008 Gazette 2008/05)**

(54) **PRECURSEURS DE LUMINOPHORES ET LUMINOPHORES COEUR-COQUILLE**

LEUCHTSTOFF UND KERNMANTELLEUCHTSTOFFVORGÄNGER

LUMINOPHORE AND CORE-SHELL LUMINOPHORE PRECURSORS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **28.07.2006 FR 0606949**

(43) Date de publication de la demande:
**29.04.2009 Bulletin 2009/18**

(73) Titulaire: **Rhodia Opérations**
**93306 Aubervilliers (FR)**

(72) Inventeurs:
• **LE-MERCIER, Thierry**
**F-93110 Rosny-sous-Bois (FR)**
• **BUISSETTE, Valérie**
**F-75015 Paris (FR)**

(74) Mandataire: **Senninger, Thierry et al**
**Rhodia Operations**
**Département Brevets**
**Bureau 0.121**
**40, rue de la Haie Coq**
**93306 Aubervilliers Cedex (FR)**

(56) Documents cités:
**EP-A1- 0 581 621     EP-A1- 1 473 347**
**WO-A-94/14920**

• **M YU, H WANG, C K LIN, G Z LI, J LIN: "Sol-Gel synthesis and photoluminescence properties of sphreical SiO22LaPO4:Ce3+/Tb3+ particles with a core-shell structure" NANOTECHNOLOGY, vol. 17, 7 juin 2006 (2006-06-07), pages 3245-3252, XP002456534**
• **DATABASE WPI Week 200453 Derwent Publications Ltd., London, GB; AN 2004-544696 XP002427653 & CN 1 485 397 A (QIU X) 31 mars 2004 (2004-03-31)**

**Description**

La présente invention a trait à un nouveau type de luminophores verts à base de phosphates mixtes de lanthane et/ou cérium, dopés par du terbium, ainsi qu'à un procédé de préparation de ces nouveaux luminophores.

Les phosphates mixtes de lanthane et/ou cérium, dopés par du terbium (qui seront désignés ici par leur acronyme usuel "LAP"), sont des composés bien connus, qui ont schématiquement la structure du phosphate de lanthane $LaPO_4$, où, sur une partie des sites, les cations de lanthane sont substitués par des cations de terbium, les autres sites lanthane pouvant être en tout ou partie substitués par des cations cérium. Dans ce cadre, on peut en particulier citer les phosphates mixtes de lanthane, terbium et cérium (dits ci-après "LAP au cérium") et les phosphates mixtes de lanthane et de terbium (dits ci-après "LAP sans cérium"). Ces phosphates mixtes sont bien connus pour leurs propriétés de luminescence. Plus précisément, ils émettent une vive lumière verte lorsqu'ils sont irradiés par certains rayonnements énergétiques de longueurs d'ondes inférieures à celles du domaine visible (rayonnements UV ou VUV pour les systèmes d'éclairage ou de visualisation). Des luminophores exploitant cette propriété sont couramment utilisés à l'échelle industrielle, par exemple dans des lampes fluorescentes trichromatiques, des systèmes de rétro-éclairage pour afficheurs à cristaux liquides ou dans des systèmes plasma.

Dans ce cadre, il a été développé depuis le début des années soixante-dix de nombreux luminophores à base de LAP avec différentes concentrations en lanthane, cérium et terbium, ces produits pouvant par ailleurs être éventuellement additivés par certains éléments dopants (Li, Na, K, Th, B...) dans le but de promouvoir et/ou renforcer encore leur potentiel de luminescence.

De nombreux procédés visant à la préparation des LAP ont été décrits dans la littérature. A ce sujet, on pourra notamment se référer aux brevets JP 62007785, WO 8204438, JP 62089790, JP 59179578 et JP 62000579 qui décrivent des procédés dits par "voie sèche", relativement longs et compliqués, où on effectue une phosphatation d'un mélange d'oxydes ou d'un oxyde mixte en présence de phosphate de diammonium, ou bien encore aux brevets JP 57023674, JP 60090287 et JP 62218477 ou US 3507804 qui décrivent des procédés par "voie humide", plus directs, où on réalise une synthèse, en milieu liquide, d'un phosphate mixte des terres rares ou d'un mélange de phosphates de terres rares.

Ces différentes synthèses conduisent à des phosphates mixtes nécessitant, pour leur application en luminescence, un traitement thermique à haute température, environ 1100°C, sous atmosphère réductrice, généralement en présence d'agents fondants. En effet, pour que le phosphate mixte soit un luminophore vert efficace, il faut que le terbium et, le cas échéant, le cérium soient à l'état d'oxydation 3+.

Les méthodes par voie sèche et par voie humide précitées présentent l'inconvénient de conduire à des luminophores de granulométrie non contrôlée, notamment insuffisamment resserrée, ce qui est encore accentué par la nécessité du traitement thermique d'activation à haute température, sous flux et sous atmosphère réductrice, qui, en général, induit encore des perturbations dans la granulométrie, conduisant ainsi à des particules de luminophores non homogènes en tailles, pouvant en outre contenir des quantités plus ou moins importantes d'impuretés liées notamment à l'emploi du flux, et présentant au final des performances en luminescence insuffisantes.

Pour pallier ces défauts, il a été proposé dans la demande EP 581 621 un procédé permettant d'améliorer la granulométrie des LAP, avec une distribution granulométrique resserrée, ce qui conduit à des luminophores particulièrement performants. En particulier, l'obtention de particules de granulométrie resserrée autorise la réalisation de revêtements en fines couches homogènes dans les lampes fluorescentes. D'autre part, la granulométrie resserrée obtenue permet d'optimiser les propriétés de luminescence du luminophore, notamment en terme de brillance. De plus, le procédé de EP 581 621 conduit à des précurseurs dont la transformation en luminophore efficace peut être effectuée par un traitement thermique ne nécessitant pas forcément l'emploi de flux et/ou d'atmosphère réductrice.

Compte tenu de ces perfectionnements, les particules de LAP s'avèrent de très bons luminophores. Néanmoins, en marge de leurs différents avantages, un problème subsiste, à savoir celui de leur coût, lié notamment à l'emploi du terbium, particulièrement onéreux.

WO 94/14920 A décrit des produits luminescents comprenant des particules d'un matériau de coeur inerte recouvert par un matériau luminescent. Néanmoins ce document ne décrit pas un produit dans lequel le revêtement est une coquille d'une épaisseur déterminée qui recouvre la totalité du coeur.

EP-A1-1473347 décrit des matériaux photoluminescents ayant un coeur minéral entouré par une coquille luminescente mais il s'agit de produits de dimension nanométrique.

Un but de la présente invention est de fournir des luminophores présentant les avantages des luminophores actuellement connus, du type de ceux décrits dans EP 581 621, mais ayant un coût plus faible.

A cet effet, selon un premier aspect, la présente invention fournit de nouveaux précurseurs de luminophores (P) notamment à base de phosphate mixte de lanthane et/ou cérium, éventuellement dopé par du terbium (LAP), comprenant des particules ayant un diamètre moyen compris entre 1,5 et 15 microns, typiquement entre 3 et 10 microns, ces particules comprenant :

-   un coeur minéral non luminophore, généralement à base d'un phosphate ou d'un oxyde minéral ; et

- une coquille à base d'un phosphate mixte de lanthane et/ou cérium, éventuellement dopé par du terbium (LAP), recouvrant de façon homogène le coeur minéral sur une épaisseur supérieure ou égale à 300 nm, notamment comprise entre 0,3 et 1 micron, par exemple 0,5 à 0,8 micron.

L'invention concerne également de nouveaux luminophores (L) tels qu'obtenus par transformation des précurseurs précédents par traitement thermique à une température supérieure à 900°C. Ces luminophores (L), de constitution générale assez similaire à celle des précurseurs de base, comprennent des particules ayant un diamètre moyen compris entre 1,5 et 15 microns, typiquement entre 3 et 10 microns, ces particules comprenant :

- un coeur minéral non luminophore, généralement à base d'un phosphate ou d'un oxyde minéral ; et
- une coquille à base d'un phosphate mixte de lanthane et/ou cérium, éventuellement dopé par du terbium (LAP), recouvrant de façon homogène le coeur minéral, sur une épaisseur supérieure ou égale à 300 nm, typiquement comprise entre 0,3 et 1 micron.

Ils présentent des propriétés de luminescence optimisées par rapport aux précurseurs (P).

En particulier, les luminophores (L) de l'invention présentent en général une très bonne brillance, similaire à celle des luminophores décrits par exemple dans la demande EP 581 621.

La brillance d'un luminophore peut être quantifiée par le rendement de conversion du luminophore, qui correspond à un rapport entre le nombre de photons émis par un luminophore et le nombre de photons qui constitue le faisceau d'excitation. Le rendement de conversion d'un luminophore est évalué par mesure dans la gamme visible du spectre électromagnétique de l'émission d'un luminophore sous une excitation dans le domaine UV ou VUV généralement à une longueur d'onde inférieure à 280 nm. La valeur de brillance obtenue (intensité d'émission intégrée entre 380 et 780 nm) est alors comparée avec celle d'un luminophore de référence.

Les luminophores (L) de l'invention ont en général des taux de conversion similaires à celle des luminophores de l'exemple 3 de EP 581 621.

Dans les précurseurs (P) et les luminophores (L) de l'invention, compte tenu de la présence spécifique du coeur minéral, qui occupe une bonne partie du volume des particules, la quantité de LAP utilisée est réduite par rapport aux particules massives de luminophores actuellement connues, ce qui réduit considérablement leur coût.

Néanmoins, hormis cette différence de structure interne, les luminophores de l'invention présentent des propriétés analogues à celles de luminophores à base de LAP actuellement connues, du type de ceux décrits dans EP 581 621.

En particulier, il s'avère que la présence du coeur non luminophore ne nuit pas - ou très peu - aux propriétés luminescentes des luminophores (L) de l'invention. Dans la plupart des cas, on obtient des propriétés de luminescence (et en particulier une brillance) similaires à celles obtenues avec des particules massives. Dans ce cadre, les travaux des inventeurs ont permis d'établir qu'une coquille de LAP d'épaisseur supérieure ou égale à 300 nm, plus préférentiellement d'au moins 400 nm, déposée sur un matériau non luminophore fournit des propriétés de luminescence similaire à un matériau massif de mêmes taille et géométrie constitué uniquement de LAP.

Par ailleurs, avec un diamètre moyen de particules de 1,5 à 15 microns, par exemple entre 3 et 10 microns, les luminophores (L) de l'invention ont un diamètre moyen de particules de l'ordre de celles des particules de luminophores actuellement utilisées.

En d'autres termes, les luminophores (L) de l'invention, à structure coeur/coquille, peuvent être schématiquement considérés comme similaires aux luminophores particulièrement intéressants actuellement connus, du type de ceux décrits dans EP 581 621, mais dans lesquels le LAP le plus interne, inutile pour les propriétés de luminescence, est remplacé par un matériau minéral moins onéreux.

Les inventeurs ont maintenant trouvé qu'il est effectivement possible d'obtenir de façon économique, reproductible et contrôlée les luminophores (L) ayant la structure du type précité, à savoir incluant un coeur minéral recouvert par une coquille homogène de LAP d'épaisseur supérieure à 300 nm. La présente invention donne pour la première fois les moyens d'accéder à de telles structures coeur/coquille.

A cet effet, l'invention fournit plus précisément un procédé de préparation des précurseurs de luminophores (P) précités, qui comprend les étapes successives (A) et (B) suivantes, dans lesquelles :

(A) on additionne une solution aqueuse (s) de sels solubles de lanthane et/ou cérium, et éventuellement de terbium, de façon progressive et continue, et sous agitation, à un milieu aqueux (m) ayant un pH initial ($pH^0$) compris entre 1 et 5, plus particulièrement de 1 à 2, et comprenant initialement :

- des particules ($p^0$) à base d'un matériau minéral non luminophore, à l'état dispersé ; et
- des ions phosphates,

en maintenant le pH du milieu réactionnel à une valeur sensiblement constante au cours de la réaction de précipitation du phosphate mixte qui s'ensuit, avec des variations du pH d'au plus 0,5 unité de pH, de part et d'autre de la valeur $pH^0$, ce par quoi on obtient des particules comprenant un coeur à base d'un matériau minéral non luminophore à la surface duquel est déposé un phosphate mixte de lanthane et/ou cérium, et éventuellement de terbium,

puis

(B) on sépare les particules obtenues du milieu réactionnel, et on les traite thermiquement à une température de 400 à 900°C, de préférence au moins égale à 600°C.

L'invention fournit également un procédé de préparation des luminophores (L) à partir des précurseurs (P) précités, qui comprend une étape (C) dans laquelle:

(C) on traite thermiquement le précurseur (P) à une température supérieure à 900°C, avantageusement d'au moins 1000°C.

Les conditions très spécifiques du procédé de l'invention conduisent, à l'issue de l'étape (B), à une localisation préférentielle (et dans la plupart des cas quasi-exclusive, voire exclusive) du phosphate mixte formé sur la surface des particules ($p^0$), sous la forme d'une coquille homogène.

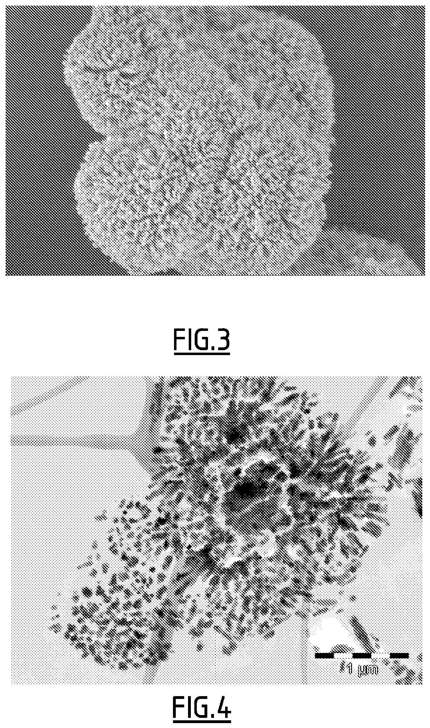

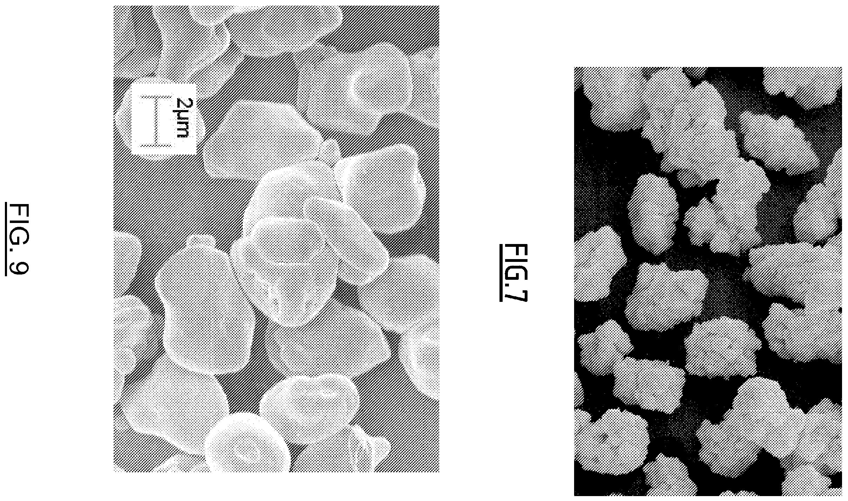

Le phosphate mixte peut précipiter pour former des morphologies différentes. Selon les conditions de préparation, on peut observer notamment la formation de particules aciculaires formant une couverture homogène sur la surface des particules ($p^0$) (morphologie dite " en piquants d'oursin ", voir fig. 3) ou la formation de particules sphériques (morphologie dite " en choufleur ", voir fig. 7).

Sous l'effet du traitement thermique de l'étape (B), la morphologie est essentiellement conservée. A l'étape (C), la morphologie peut, selon les conditions, évoluer pour devenir plus lisse.

Différentes caractéristiques et modes de réalisation avantageux du procédé de l'invention et des précurseurs (P) et des luminophores (L) vont maintenant être décrits plus en détails.

*L'étape (A)*

Dans l'étape (A) du procédé de l'invention, on réalise une précipitation directe d'un phosphate mixte de lanthane et/ou cérium et éventuellement de terbium, à pH contrôlé, en faisant réagir la solution (s) de sels solubles de lanthane et/ou cérium, et terbium avec le milieu (m) contenant des ions phosphates.

Par ailleurs, de façon caractéristique, la précipitation de l'étape (A) est conduite en présence de particules ($p^0$), initialement présentes à l'état dispersé dans le milieu (m), à la surface desquelles le phosphate mixte qui précipite va se fixer, étant donné les conditions spécifiques mises en oeuvre dans l'étape (A) et qui sont généralement maintenues à l'état dispersé tout au long de l'étape (A), typiquement en laissant le milieu sous agitation.

La nature exacte des particules ($p^0$) peut varier en une assez large mesure. Toutefois, il s'agit avantageusement de particules de morphologie isotrope, de préférence sensiblement sphérique.

Le matériau des particules ($p^0$) peut notamment être un oxyde ou un phosphate.

Parmi les oxydes, on peut citer en particulier les oxydes de zirconium, zinc, titane, aluminium et des terres rares (notamment $Y_2O_3$, $Gd_2O_3$ et $CeO_2$).

Parmi les phosphates, on peut mentionner les phosphates de terres rares tels que le lanthane, le lanthane et le cérium, le La, Ce, Tb moins dopé en ions Tb que le matériau de coquille, l'yttrium, des polyphosphates de terres rares ou d'aluminium.

Par ailleurs, conviennent d'autres composés minéraux tels que les vanadates ($YVO_4$), les germanates, la silice, les silicates, les tungstates, les molybdates, les aluminates ($BaMgAl_{10}O_{17}$), les sulfates ($BaSO_4$), les borates ($YBO_3$, $GdBO_3$), les carbonates et les titanates (tel que $BaTiO_3$).

Enfin, peuvent être appropriés les composés issus des composés précédents tels que les oxydes mixtes, notamment de terres rares, par exemple les oxydes mixtes de zirconium et de cérium, les phosphates mixtes, notamment de terres rares, et les phosphovanadates.

En particulier, le matériau de particules ($p^0$) peut présenter des propriétés optiques particulières, notamment des propriétés réflectrices des rayonnements UV.

Selon un mode de réalisation, les particules ($p^0$) sont à base d'un phosphate de terres rares tels que le lanthane, le cérium, l'yttrium ou le gadolinium ou l'un de leurs phosphates mixtes. Selon un mode de réalisation particulier, les particules ($p^0$) sont à base de phosphate de lanthane.

Selon un autre mode de réalisation, les particules ($p^0$) sont à base d'un oxyde d'un ou plusieurs métaux. Sont notamment adaptées des particules à base d'un oxyde de terres rares, tels que le lanthane, le cérium, l'yttrium, le scandium ou le gadolinium ou l'un de leurs oxydes mixtes; d'un oxyde de métaux tels que le titane, le zirconium, le silicium, l'aluminium ; d'aluminates de métaux alcalino-terreux, tels que des aluminates de baryum et/ou de magnésium,

tels que $MgAl_2O_4$, $BaAl_2O_4$, ou $BaMgAl_{10}O_{17}$.

Par l'expression " à base de", on entend désigner des compositions comprenant au moins 50%, de préférence au moins 70%, et plus préférentiellement au moins 80%, voire 90% en masse du matériau considéré. Selon un mode particulier, les particules ($p^0$) peuvent être essentiellement constituées par ledit matériau (à savoir en une teneur d'au moins 95% en masse, par exemple au moins 98%, voire ou au moins 99% en masse).

Le terme de "terres rares" désigne quant à lui, au sens de la présente description, un élément choisi parmi l'yttrium, le scandium et les lanthanides, les lanthanides étant les éléments métalliques dont le numéro atomique est compris, de façon inclusive, entre 57 (lanthane) et 71 (lutécium).

Quelle que soit leur nature exacte, les particules ($p^0$) ont avantageusement initialement un diamètre moyen compris entre 0,5 et 14 microns, de préférence entre 2 et 9 microns.

Le diamètre moyen auquel il est fait référence est la moyenne en volume des diamètres d'une population de particules.

Les valeurs de granulométrie données ici et pour le reste de la description sont mesurées au moyen d'un granulomètre laser, notamment de type Laser Coulter ou Malvern.

Par ailleurs, les particules ($p^0$) ont de préférence initialement un faible indice de dispersion, typiquement inférieur à 0,6, de préférence inférieur à 0,5, par exemple inférieur à 0,4.

Par "indice de dispersion" d'une population de particules, on entend, au sens de la présente description, le rapport I tel que défini ci-dessous :

$$I=(\varnothing_{84}- \varnothing_{16})/(2x\ \varnothing_{50}),$$

où : $\varnothing_{84}$ est le diamètre des particules pour lequel 84% des particules ont un diamètre inférieur à $\varnothing_{84}$ ;

$\varnothing_{16}$ est le diamètre des particules pour lequel 84% des particules ont un diamètre inférieur à $\varnothing_{16}$ ; et

$\varnothing_{50}$ est le diamètre des particules pour lequel 50% des particules ont un diamètre inférieur à $\varnothing_{50}$.

Cette définition de l'indice de dispersion donnée ici pour les particules s'applique aussi pour le reste de la description aux précurseurs (P) et aux luminophores (L).

Les diamètres peuvent être mesurés au moyen d'un granulomètre laser disponible dans le commerce.

De façon générale, on choisira avantageusement des particules ($p^0$) présentant une distribution en taille monodisperse et la plus resserrée possible autour de la valeur moyenne.

Selon un mode de réalisation, les particules ($p^0$) employées peuvent être des particules à base de phosphate de lanthane non dopé. Ces particules ($p^0$) peuvent être préparées par des procédés connus, par exemple celui décrit dans EP 0 581 621.

Plusieurs variantes intéressantes de l'invention vont être décrites maintenant ci-dessous.

Selon une première variante, les particules ($p^0$) utilisées sont des particules denses ce qui correspond en fait à des particules à base d'un matériau généralement bien cristallisé ou encore à base d'un matériau dont la surface spécifique est faible.

On entend par surface spécifique la surface spécifique B.E.T. déterminée par adsorption du krypton. Les mesures de surface données dans la présente description ont été effectuées sur un appareil ASAP2010 après dégazage de la poudre pendant 8h, à 200°C.

Par surface spécifique faible, on entend une surface spécifique d'au plus 1 $m^2/g$, plus particulièrement d'au plus 0,6 $m^2/g$.

Selon une autre variante, les particules ($p^0$) utilisées sont à base d'un matériau stable en température. On entend par là un matériau dont le point de fusion se situe à une température élevée, qui ne se dégrade pas en sous produit gênant pour l'application comme luminophore à cette même température et qui reste cristallisé et donc qui ne se transforme pas en matériau amorphe toujours à cette même température. La température élevée qui est visée ici est celle qui a été donnée pour l'étape (C), c'est-à-dire une température au moins supérieure à 900°C, de préférence au moins supérieure à 1000°C et encore plus préférentiellement d'au moins 1200°C.

La troisième variante consiste à utiliser des particules qui combinent les caractéristiques de deux variantes précédentes donc des particules à base d'un matériau de faible surface spécifique et stable en température.

Le fait d'utiliser des particules ($p^0$) selon au moins une des variantes décrites ci-dessus, offre plusieurs avantages. Tout d'abord, la structure coeur/coquille du précurseur (P) est particulièrement bien conservée dans le luminophore L qui en est issu ce qui permet d'obtenir un avantage coût maximum.

Par ailleurs, il a été constaté que les luminophores (L) obtenus à partir des précurseurs de luminophore (P) dans la fabrication desquels on a utilisé des particules ($p^0$) selon au moins une des variantes précitées, présentaient des rendements de photoluminescence non seulement identiques mais dans certains cas supérieurs à ceux d'un luminophore constitué d'un LAP de même composition mais qui ne présente pas la structure coeur-coquille.

Les particules ($p^0$) denses peuvent être à base des matériaux qui ont été décrits plus haut, notamment les oxydes et les phosphates. On peut mentionner plus particulièrement le phosphate de lanthane et le phosphate d'yttrium densifiés; les alumines, notamment les alumines monocristallisées et l'alumine de type alpha monocristallisée; les aluminates comme les aluminates de baryum et de magnésium, les borates, notamment le borate d'yttrium; l'oxyde de zirconium.

Ces matériaux peuvent être densifiés notamment en utilisant la technique connue des sels fondus. Cette technique consiste à porte le matériau à densifier à une température élevée, par exemple d'au moins 900°C, de préférence sous atmosphère réductrice, par exemple un mélange argon/hydrogène, en présence d'un sel qui peut être choisi parmi les chlorures (chlorure de sodium, de potassium par exemple), les fluorures (fluorure de lithium par exemple), les borates (borate de lithium) ou l'acide borique.

Dans l'étape (A) du procédé de l'invention, l'ordre d'introduction des réactifs est important.

En particulier, la solution (s) des sels solubles de terres rares doit spécifiquement être introduite dans un milieu (m) qui contient initialement les ions phosphates et les particules ($p^0$).

Dans la solution (s), les concentrations des sels de lanthane, cérium et terbium dans la solution aqueuse (s) peuvent varier dans de larges limites. Typiquement, la concentration totale en les trois terres rares peut être comprise entre 0,01 mol/litre et 3 moles par litre.

Des sels de lanthane, cérium et terbium solubles adaptés dans la solution (s) sont notamment les sels hydrosolubles, comme par exemple les nitrates, chlorures, acétates, carboxylates, ou un mélange de ces sels. Des sels préférés selon l'invention sont les nitrates.

La solution (s) peut comprendre en outre d'autres sels métalliques, comme par exemple des sels d'autres terres rares, d'éléments alcalins, de thorium, de bore, ou d'autres éléments, pour obtenir des LAP dopés avec ces éléments.

Les ions phosphates initialement présents dans le milieu (m) et destinés à réagir avec la solution (s) peuvent être introduits dans le milieu (m) sous forme de composés purs ou en solution, comme par exemple l'acide phosphorique, des phosphates d'alcalins ou des phosphates d'autres éléments métalliques formant un composé soluble avec les anions associés aux terres rares.

Selon un mode préféré de réalisation de l'invention, les ions phosphates sont initialement présents dans le mélange (m) sous forme de phosphates d'ammonium. Selon ce mode de réalisation, le cation ammonium se décompose lors du traitement thermique de l'étape (B), permettant ainsi d'obtenir un phosphate mixte de grande pureté. Parmi les phosphates d'ammonium, le phosphate diammonique ou monoammonique sont des composés particulièrement préférés pour la mise en oeuvre de l'invention.

Les ions phosphates sont avantageusement introduits en excès stoechiométrique dans le milieu (m), par rapport à la quantité totale de lanthane, cérium et terbium présente dans la solution (s), à savoir avec un rapport molaire initial phosphate / (La+Ce+Tb) supérieur à 1, de préférence compris entre 1,1 et 3, ce ratio étant typiquement inférieur à 2, par exemple entre 1,1 et 1,5.

Selon le procédé de l'invention, la solution (s) est introduite de façon progressive et continue dans le milieu (m).

D'autre part, selon une autre caractéristique importante du procédé de l'invention, qui permet notamment d'obtenir un revêtement homogène des particules ($p^0$) par le phosphate mixte de LaCeTb, le pH initial ($pH^0$) de la solution contenant les ions phosphates est de 1 à 5, plus particulièrement de 1 à 2. En outre, il est par la suite de préférence maintenu sensiblement à cette valeur $pH^o$ pendant toute la durée de l'addition de la solution (s), en maintenant le pH systématiquement entre ($pH^0$ - 0,5) et ($pH° + 0,5$).

Pour atteindre ces valeurs de pH et assurer le contrôle de pH requis, on peut additionner au milieu (m) des composés basiques ou acides ou des solutions tampons, préalablement et/ou conjointement à l'introduction de la solution (s).

Comme composés basiques adaptés selon l'invention, on peut citer, à titre d'exemples, les hydroxydes métalliques ($NaOH$, $KOH$, $CaOH_2$,....) ou bien encore l'hydroxyde d'ammonium, ou tout autre composé basique dont les espèces le constituant ne formeront aucun précipité lors de leur addition dans le milieu réactionnel, par combinaison avec une des espèces par ailleurs contenues dans ce milieu, et permettant un contrôle du pH du milieu de précipitation.

D'autre part, il est à noter que la précipitation de l'étape (A) est réalisée en milieu aqueux, généralement en utilisant l'eau comme unique solvant. Toutefois, selon un autre mode de réalisation envisageable, le milieu de l'étape (A) peut éventuellement être un milieu hydro-alcoolique, par exemple un milieu eau/éthanol.

Par ailleurs, la température de mise en oeuvre de l'étape (A) est généralement comprise entre 10°C et 100°C.

L'étape (A) peut comporter en outre une étape de mûrissement, à l'issue de l'addition de la totalité de la solution (s) et préalablement à l'étape (B). Dans ce cas, ce mûrissement est avantageusement conduit en laissant le milieu obtenu sous agitation à la température de réaction, avantageusement pendant au moins 20 minutes après la fin de l'ajout de la solution (s).

*L'étape (B)*

Dans l'étape (B), les particules de surface modifiée telles qu'obtenues à l'issue de l'étape (A) sont d'abord séparées du milieu réactionnel. Ces particules peuvent être facilement récupérées à l'issue de l'étape (A), par tout moyen connu en soi, en particulier par simple filtration, ou éventuellement par d'autres types de séparations solide/liquide. En effet, dans les conditions du procédé selon l'invention, on précipite un phosphate mixte LAP supporté, qui est non gélatineux et aisément filtrable.

Les particules récupérées peuvent ensuite avantageusement être lavées, par exemple avec de l'eau, dans le but de les débarrasser d'éventuelles impuretés, notamment des groupements nitrates et/ou ammoniums adsorbés.

A l'issue de ces étapes de séparation et, le cas échéant, de lavage, l'étape 5b) comprend une étape spécifique de traitement thermique, à une température comprise entre 400 et 900°C. Ce traitement thermique comprend une calcination, le plus souvent sous air, de préférence conduit à une température d'au moins 600°C, avantageusement entre 700 et 900°C.

*Les précurseurs de luminophores (P)*

A l'issue de l'étape (B), on obtient un précurseur (P) particulaire, où les particules présentent une morphologie particulière, à savoir incluant un coeur minéral recouvert par un enrobage homogène constitué de cristaux d'un phosphate mixte de lanthane et/ou cérium, éventuellement dopé par du terbium.

De façon générale, dans les particules constitutives des précurseurs (P) tels qu'obtenus selon l'invention, le coeur a généralement un diamètre moyen de l'ordre de celui des particules $(p^0)$ mises en oeuvre pour sa constitution, chacun des coeurs des particules constitutives du précurseur (P) étant schématiquement constitué par une des particules $(p^0)$ initiale à l'état individualisé (ou bien éventuellement par une agrégation de tout au plus quelques particules). Ainsi, le coeur minéral des particules constitutives du précurseur (P) a en général un diamètre moyen de 0,5 à 15 microns (par exemple de 0,5 à 14 microns), typiquement de l'ordre de 1 à 10 microns (notamment entre 2 et 9 microns).

La composition du coeur est quant à elle généralement identique ou très proche de la composition des particules $(p^0)$. Ainsi, le coeur minéral des particules d'un précurseur (P) selon l'invention est avantageusement à base d'un phosphate ou d'un oxyde minéral, et plus particulièrement un phosphate de terre rare, tel que le phosphate de lanthane non dopé, ou un oxyde d'aluminium. Selon un mode de réalisation spécifique, le coeur minéral des particules du précurseur (P) est essentiellement constitué de phosphate de lanthane $LaPO_4$.

Selon les variantes décrites plus haut qui correspondent au cas dans lequel on utilise des particules $(p^0)$ denses et/ou en un matériau stable en température, le coeur minéral des particules du précurseur (P) est un coeur dense et/ou en le même matériau stable en température c'est-à-dire notamment un coeur dont la surface spécifique est d'au plus 1 $m^2/g$, plus particulièrement d'au plus 0,6 $m^2/g$.

A la surface de leur coeur minéral, les précurseurs (P) comprennent une couche à base de phosphate mixte de lanthane et/ou cérium, éventuellement dopé par du terbium, d'épaisseur moyenne généralement comprise entre 0,3 et 1 microns, par exemple entre 0,5 et 0,8 micron.

Les dimensions du coeur et de la coquille des précurseurs (P) peuvent être mesurées notamment sur des photographies de microscopie électronique en transmission de coupes des particules.

Sur les particules des précurseurs (P) de l'invention, le LAP est déposé sous forme d'une couche homogène. Par "couche homogène", on entend une couche continue, recouvrant totalement le coeur et dont l'épaisseur n'est de préférence jamais inférieure à 300 nm. Cette homogénéité de la répartition du phosphate mixte LAP est notamment visible sur des clichés de microscopie électronique à balayage. Des mesures de diffraction par des rayons X (DRX) mettent en évidence la présence de deux compositions distinctes entre le coeur et la coquille.

Le phosphate mixte (LAP) qui est présent dans la coquille des particules de précurseur (P) telles qu'obtenues à l'issue de l'étape (B) répond le plus souvent à la formule générale (I) suivante :

$$La_{(1-x-y)}Ce_xTb_yPO_4 \qquad (I)$$

dans laquelle :

x, éventuellement nul, est compris, inclusivement, entre 0 et 0,95 ;
y est compris, inclusivement, entre 0,05 et 0,3 ; et

la somme (x+y) est inférieure ou égale à 1.

En règle générale, on préfère que la somme (x+y) reste strictement inférieure à 1, c'est-à-dire que le composé de formule (I) contient du lanthane. Il n'est toutefois pas exclu que cette somme soit égale à 1, auquel cas le composé (I) est un phosphate mixte de cérium et terbium, exempt de lanthane.

Selon un mode de réalisation particulièrement intéressant, le phosphate mixte qui est présent sur la couche externe des particules de précurseur (P) est un LAP au cérium qui répond à la formule (Ia) suivante :

$$La_{(1-x-y)}Ce_xTb_yPO_4 \qquad (Ia)$$

dans laquelle :

x est compris, inclusivement, entre 0,1 et 0,5 ;
y est compris, inclusivement, entre 0,1 et 0,3,

et la somme (x+y) est comprise entre 0,4 et 0,6.

Selon un autre mode de réalisation envisageable, le phosphate mixte qui est présent sur la couche externe des particules de précurseur (P) est un LAP sans cérium qui répond à la formule (Ib) suivante :

$$La_{(1-y)}Tb_yPO_4 \qquad (Ib)$$

dans laquelle :

y est compris, inclusivement, entre 0,05 et 0,3.

Selon encore un autre mode de réalisation envisageable, le phosphate mixte qui est présent sur la couche externe des particules de précurseur (P) est un LAP sans terbium qui répond à la formule (Ic) suivante :

$$La_{(1-y)}Ce_yPO_4 \qquad (Ic)$$

dans laquelle :

y est compris, inclusivement, entre 0,01 et 0,3.

On peut noter que la couche peut comprendre, outre des phosphates mixtes décrits ci-dessus, d'autres composés, par exemple des polyphosphates de terres rares en quantité généralement minoritaire, n'excédant pas 5% par exemple.

Selon un mode de réalisation particulier, le phosphate mixte peut comprendre d'autres éléments jouant classiquement un rôle notamment de promoteur des propriétés de luminescence ou de stabilisateur des degrés d'oxydation des éléments cérium et terbium; à titre d'exemple, on peut citer plus particulièrement les alcalins (Li, Na, K, en particulier), le thorium et le bore.

Il est à souligner que, le plus souvent, dans les particules de précurseurs (P), sensiblement tout le phosphate mixte LAP présent est localisé dans les couches entourant le coeur.

Les particules des précurseurs (P) ont par ailleurs avantageusement un diamètre moyen global compris entre 1,5 et 15 microns, par exemple entre 3 et 8, plus particulièrement entre 3 et 6 ou entre 4 et 8 microns.

D'autre part, les particules de précurseurs (P) ont avantageusement un indice de dispersion faible, cet indice de dispersion étant généralement inférieur à 0,6, de préférence d'au plus 0,5.

*L'étape (C)*

Dans l'étape (C) du procédé de l'invention, les particules de précurseurs (P) sont transformées en luminophores verts efficaces, par un traitement thermique à une température à plus de 900°C, et avantageusement de l'ordre d'au moins 1000°C.

Bien que les particules de précurseur (P) puissent elles-mêmes présenter des propriétés intrinsèques de luminescence, ces propriétés sont grandement améliorées par le traitement thermique de l'étape (C).

Ce traitement thermique a notamment pour conséquence de convertir l'ensemble des espèces Ce et Tb à leur état d'oxydation (+III). Il peut être réalisé selon des moyens connus en soi pour le traitement thermique de luminophores, en présence d'un agent fondant (aussi désigné comme " flux ") ou non, sous ou sans atmosphère réductrice, selon les cas.

Les particules du précurseur (P) de l'invention présentent la propriété particulièrement remarquable de ne pas motter lors de la calcination, c'est à dire qu'elles n'ont généralement pas tendance à s'agglomérer et donc à se retrouver sous une forme finale de granulats grossiers de taille de 0,1 à plusieurs mm par exemple; il n'est donc pas nécessaire de procéder à un broyage préalable des poudres avant de conduire sur celles-ci les traitements classiques destinés à l'obtention du luminophore final, ce qui constitue encore un avantage de l'invention.

Selon une première variante, l'étape (C) est conduite en soumettant les particules de précurseur (P) à un traitement thermique en présence d'un agent fondant.

A titre d'agent fondant, on peut citer le fluorure de lithium, le tétraborate de lithium, le chlorure de lithium, le carbonate de lithium, le phosphate de lithium, le chlorure de potassium, le chlorure d'ammonium, l'oxyde de bore et l'acide borique et les phosphates d'ammonium, ainsi que leurs mélanges.

L'agent fondant est mélangé aux particules (P) à traiter, puis le mélange est porté à une température de préférence comprise entre 1000°C et 1300°C.

Le traitement thermique peut être conduit sous atmosphère réductrice ($H_2$, $N_2/H_2$ ou $Ar/H_2$ par exemple) ou non ($N_2$, Ar ou air).

Selon une deuxième variante de l'étape (C), on soumet les particules (P) au traitement thermique en l'absence d'agent fondant.

Cette variante peut en outre être indifféremment conduite sous atmosphère réductrice ou non réductrice, en particulier sous atmosphère oxydante comme par exemple de l'air, sans avoir à mettre en oeuvre des atmosphères réductrices, coûteuses. Bien entendu, il est tout à fait possible, bien que moins économique, de mettre également en oeuvre, toujours dans le cadre de cette seconde variante, des atmosphères réductrices ou non.

Un mode de réalisation spécifique de l'étape (C) consiste à traiter le précurseur (P) à une température de 1000 à 1300°C sous atmosphère d'argon et d'hydrogène.

Ce type de traitement est en lui-même connu, et classiquement utilisé dans les procédés d'élaboration de luminophores, notamment pour adapter ces derniers à l'application souhaitée (morphologie des particules, état de surface, brillance, par exemple).

Après traitement, les particules sont avantageusement lavées, de manière à obtenir un luminophore le plus pur possible et dans un état désaggloméré ou faiblement aggloméré. Dans ce dernier cas, il est possible de désagglomérer le luminophore en lui faisant subir un traitement de désagglomération dans des conditions douces.

Les traitements thermiques précités permettent d'obtenir des luminophores (L) qui conservent une structure coeur/coquille et une distribution granulométrique très proches de celles des particules de précurseur (P).

En outre, le traitement thermique de l'étape (C) peut être conduit sans induire des phénomènes sensibles de diffusion des espèces Ce et Tb de la couche luminophore externe vers de coeur.

Selon un mode de réalisation spécifique envisageable de l'invention, il est possible de conduire en une seule et même étape les traitements thermiques des étapes (B) et (C). Dans ce cas, on obtient directement le luminophore (L) sans s'arrêter au précurseur (P).

*Les luminophores (L)*

Les luminophores (L) du type obtenu à l'issu de l'étape (C), par traitement thermique des précurseurs (P) comprennent spécifiquement une coquille extérieure à base d'un phosphate mixte LAP. Ce phosphate mixte répond avantageusement à l'une des formules (I), (Ia) ou (Ib) précitées, le luminophore (L) étant dans ce cas obtenu par traitement thermique d'un précurseur à base du phosphate correspondant.

On distingue trois types de luminophores selon l'invention, en fonction de la composition du phosphate mixte de la coquille, à savoir :

- des luminophores dits "au cérium" dans lesquels le phosphate mixte de la coquille est un LAP au cérium (phosphate de formule (Ia) précitée par exemple) ;
- des luminophores dits "sans cérium" dans lesquels le phosphate mixte de la coquille est un LAP sans cérium (phosphate de formule (Ib) précitée par exemple) ; et
- des luminophores dits "sans terbium" dans lesquels le phosphate mixte de la coquille est un LAP sans terbium (phosphate de formule (Ic) précitée par exemple).

Le phosphate mixte présent sur la couche externe des luminophores (L) de l'invention peut éventuellement comprendre un élément dopant renforçant ses propriétés de luminescence, notamment un promoteur des propriétés de luminescence ou de stabilisateur des degrés d'oxydation des éléments cérium et terbium. A titre d'exemples, on peut citer plus particulièrement les alcalins (Li, Na, K, ...), le thorium et le bore.

Le coeur des luminophores (L) de l'invention a quant à lui généralement sensiblement la même composition que les particules ($p^0$) initialement introduites dans le milieu (m) de l'étape (A). Dans certains cas, on peut éventuellement noter une migration partielle de certaines espèces (Ce et Tb par exemple) de la coquille vers le coeur, mais ces phénomènes de diffusion partielle peuvent dans la plupart des cas être évités dans les conditions du procédé de l'invention.

Selon les variantes décrites plus haut qui correspondent au cas dans lequel on utilise des particules ($p^0$) denses et/ou en un matériau stable en température, le coeur minéral des particules du luminophore (L) est un coeur dense et/ou en le même matériau stable en température c'est-à-dire notamment un coeur dont la surface spécifique est d'au plus 1

$m^2/g$, plus particulièrement d'au plus 0,6 $m^2/g$. Pour ces variantes, on n'observe généralement pas la migration partielle de certaines espèces qui a été mentionnée ci-dessus.

Comme indiqué plus haut, l'étape (C) a pour effet d'améliorer les propriétés de luminescence et en particulier de brillance, notamment en réduisant essentiellement toutes les espèces métalliques Ce et Tb à l'état d'oxydation +IV initialement présentes dans les précurseurs (P) à l'état d'espèces à l'état d'oxydation +III. Ainsi, les luminophores (I) se distinguent généralement des précurseurs (P) par leur composition, où les espèces Ce et Tb à l'état d'oxydation +IV sont sensiblement absentes. Il est possible d'apprécier la présence ou l'absence du cérium et/ou du terbium à l'état d'oxydation 4+ par une analyse de surface des produits par la technique dite X.P.S. et qui est notamment décrite par Praline et Coll., dans le Journal of Electron Spectroscopy and Related Phenomena, 21 (1981), pp. 17-30 et 31-46.

Néanmoins, les luminophores (L) conservent en général une constitution assez proche de celles des précurseurs (P), avec un diamètre moyen de particules similaire (compris entre 1,5 et 15 microns, par exemple entre 3 et 8, plus particulièrement entre 3 et 6 ou entre 4 et 8 microns), et une structure analogue (coeur de diamètre moyen d'environ 0,5 à environ 15 microns, typiquement de l'ordre de 1 à 10 microns, recouvert par une couche à base d'un LAP d'épaisseur moyenne de l'ordre de 0,3 à 1 micron, par exemple entre 0,5 et 0,8 micron. Par "*diamètre moyen*" des particules d'un luminophore, on entend, au sens de la présente description, le diamètre moyen tel que mesuré sur une dispersion aqueuse du luminophore, au moyen d'un granulomètre laser, notamment de type Laser Coulter ou Malvern. Là encore, la structure coeur/coquille des luminophores peut être mise en évidence par des photographies de microscopie électronique en transmission de coupes des particules, associées à des diffractogrammes aux rayons X.

Par ailleurs, les luminophores (L) ont le plus souvent une granulométrie très homogène, avec un indice de indice de dispersion inférieur à 0,6, par exemple inférieur à 0,5. De façon plus générale, les luminophores (L) de l'invention peuvent avantageusement présenter une granulométrie monodisperse et resserrée autour d'une valeur moyenne.

Comme souligné plus haut dans la description, les luminophores (L) de l'invention présentent en outre des propriétés de luminescence et de brillance similaires à celles des luminophores décrits dans le brevet EP 581 621. Ils constituent de ce fait une alternative économiquement intéressante à ces luminophores.

Par ailleurs, les luminophores (L) de l'invention présentent en général une très bonne luminescence, similaire à celle des luminophores décrits par exemple dans la demande EP 581 621.

Avantageusement, le luminophore présente, par rapport à un phosphate mixte de La et/ou de Ce dopé par du Tb et de composition exprimée en masse d'oxyde de La de 55%, d'oxyde de Ce de 30% et d'oxyde de Tb de 15%, un rendement de photoluminescence substantiellement identique ou supérieur et une teneur en Tb inférieure à au moins 5%, plus particulièrement au moins 10% en masse à celle dudit phosphate mixte.

De préférence, la teneur en Tb est inférieure à au moins 30%, plus particulièrement au moins 40% et de préférence 50% en masse à celle dudit phosphate mixte.

Par "rendement de photoluminescence substantiellement identique", on entend que les valeurs mesurées se situent dans l'intervalle de confiance, tenant compte des incertitudes de mesure. Le rendement de photoluminescence peut être mesuré notamment par intégration du spectre d'émission entre 450 et 700 nm, sous excitation à 254 nm.

En outre, les propriétés de luminescence des luminophores (L) de l'invention sont en général stables dans le temps. Cette stabilité peut être appréciée au moyen de tests connus dans le domaine des luminophores sous le terme de test de "*baking*". Ce test consiste à calciner, à 600°C, pendant 10 minutes et sous air, une couche mince de luminophore déposée avec un liant classique sur un support inerte (verre), et à mesurer le nouveau rendement de conversion du luminophore ainsi traité. Pour les luminophores selon l'invention, le plus souvent la chute du rendement de conversion n'excède pas 1 % à 2% en valeur relative.

L'utilisation des luminophores (L) de l'invention pour fournir une luminescence verte dans divers dispositifs constitue encore un objet particulier de l'invention.

Les luminophores de l'invention (L) présentent des propriétés de luminescence intenses dans le vert pour des excitations électromagnétiques correspondant aux divers domaines d'absorption du produit.

Ainsi, les luminophores à base de cérium et de terbium de l'invention peuvent être utilisés dans les systèmes d'éclairage ou de visualisation présentant une source d'excitation dans la gamme UV (200 - 280 nm), par exemple autour de 254 nm. On notera en particulier les lampes trichromatiques à vapeur de mercure, les lampes pour rétro-éclairage des systèmes à cristaux liquides, sous forme tubulaire ou planaire (LCD Back Lighting). Ils présentent en particulier une taille de particules adaptable, par exemple autour de 3 à 5 $\mu$m, notamment de 4 à 5 $\mu$m, ainsi qu'une forte brillance sous excitation UV, et une absence de perte de luminescence à la suite d'un post-traitement thermique. Leur luminescence est en particulier stable sous UV à des températures relativement élevées (100 - 300°C).

Les luminophores à base de terbium de l'invention sont également de bons candidats comme luminophores verts pour les systèmes à excitation VUV (ou "plasma"), que sont par exemple les écrans plasma et les lampes trichromatiques sans mercure, notamment les lampes à excitation Xenon (tubulaires ou planaires). Les luminophores de l'invention possèdent une forte émission verte sous excitation VUV (par exemple, autour de 147 nm et 172 nm), due à une forte absorption de la matrice de phosphate de terres rares, ainsi que des ions terbium. Les luminophores sont stables sous excitation VUV. Ils présentent en outre une taille de particules adaptable, par exemple autour de 2,5 et 4 $\mu$m.

Les luminophores de l'invention peuvent également être utilisés comme luminophores verts dans des dispositifs à excitation par diode électroluminescente. Ils peuvent être notamment utilisés dans des systèmes excitables dans le proche UV.

Ils peuvent être également utilisés dans des systèmes de marquage à excitation UV.

Les luminophores de l'invention peuvent être mis en oeuvre dans les systèmes de lampes et d'écrans par des techniques bien connues, par exemple par sérigraphie, par électrophorèse ou sédimentation.

Ils peuvent également être également dispersés dans des matrices organiques (par exemple, des matrices plastiques ou des polymères transparents sous UV ...), minérales (par exemple, de la silice) ou hybrides organo-minérales.

Les luminophores (L) de l'invention présentent des propriétés de luminescence sous une excitation électromagnétique correspondant à une bande d'absorption du matériau plus énergétique. Ainsi, le cérium présente une bande autour de 254 nm, le terbium absorbe autour de 172 nm et la matrice phosphate présente une bande autour de 147 nm.

Par conséquent, les luminophores de l'invention peuvent être utilisés dans des dispositifs à excitation UV, notamment dans des lampes trichromatiques, notamment à vapeur de mercure, les lampes de rétroéclairage de systèmes à cristaux liquides, les écrans plasma, les lampes à excitation Xenon, les dispositifs à excitation par diodes électroluminescentes et les systèmes de marquage à excitation UV.

L'invention concerne aussi, selon un autre aspect, les dispositifs luminescents du type précité, comprenant les luminophores (L) de l'invention à titre de source de luminescence verte.

L"invention est expliquée plus en détail au moyen des exemples ci-après et des figures qui montrent :

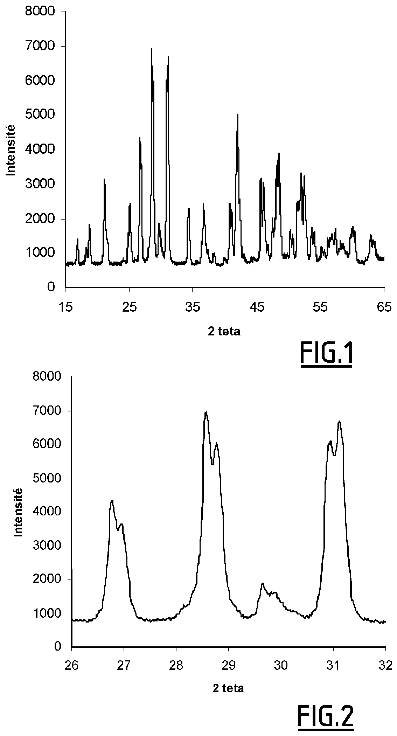

Fig. 1 : un diffractogramme de la poudre obtenue à l'exemple 3 ;
Fig. 2 : un zoom du diffractogramme de la poudre obtenue à l'exemple 3;
Fig. 3 : un cliché MEB de la poudre obtenue à l'exemple 3 ;
Fig. 4 : un cliché MET d'une coupe effectuée par ultramicrotomie d'un grain de la poudre obtenue à l'exemple 3 ;
Fig. 5 : un cliché MEB de la poudre obtenue à l'exemple 4 ;
Fig. 6 : un cliché MET d'une coupe effectuée par ultramicrotomie d'un grain de la poudre obtenue à l'exemple 4 ;
Fig. 7 : un cliché MEB de la poudre obtenue à l'exemple 5 ;
Fig. 8 : un spectre d'émission du luminophore obtenu à l'exemple 9 ; et
Fig. 9 : un cliché MEB du luminophore obtenu à l'exemple 17.

EXEMPLES

Dans les exemples qui suivent, les particules préparées ont été caractérisées en termes de granulométrie, morphologie et composition par les méthodes suivantes.

Mesures granulométriques

Les diamètres de particules ont été déterminées au moyen d'un granulomètre laser (Malvern 2000) sur un échantillon de particules dispersé dans l'eau aux ultrasons (130 W) pendant 1 minute 30 secondes.

Microscopie électronique

Les clichés de microscopie électronique à transmission sont réalisés sur une coupe (microtomie) des particules, en utilisant un microscope TEM haute résolution de type JEOL 2010 FEG. La résolution spatiale de l'appareil pour les mesures de composition chimique par EDS (spectroscopie à dispersion en énergie) est < 2 nm. La corrélation des morphologies observées et des compositions chimiques mesurées permet de mettre en évidence la structure coeur-coquille, et de mesurer sur les clichés l'épaisseur de la coquille.

Les mesures de composition chimique par EDS sont réalisées par analyse de diffraction aux rayons X, sur des clichés effectués par STEM HAADF. La mesure correspond à une moyenne effectuée sur au moins deux spectres. La résolution spatiale pour la composition est suffisante pour distinguer les compositions du coeur et de la coquille. Les teneurs sont estimées en% atomique.

Diffraction aux rayons X

Les diffractogrammes X ont été réalisés en utilisant la raie $K_\alpha$ avec du cuivre comme anti-cathode, selon la méthode Bragg-Brendano. La résolution est choisie de manière à être suffisante pour séparer les raies du LaP04 : Ce, Tb et du LaPO$_4$, de préférence, elle est $\Delta(2\Theta)<0,02°$.

<u>EXEMPLE COMPARATIF</u> : Précurseur de référence selon FR 2 694 299

Dans 500 mL d'une solution d'acide phosphorique $H_3PO_4$ préalablement amenée à pH 1,6 par addition d'ammoniaque et portée à 60°C, sont ajoutés en une heure 500 mL d'une solution de nitrates de TR de concentration globale 1,5 mol/l et se décomposant comme suit : 0,855 mol/l de nitrate de lanthane, 0,435 mol/l de nitrate de cérium, et 0,21 mol/l de nitrate de terbium. Le rapport molaire phosphate / terres rares est de 1,15. Le pH au cours de la précipitation est régulé à 1,6 par ajout d'ammoniaque.

A l'issue de l'étape de précipitation, le mélange est encore maintenu 1 h à 60°C. Le précipité résultant est ensuite aisément récupéré par filtration, lavé à l'eau puis séché à 60°C sous air, puis soumis à un traitement thermique de 2h à 900°C sous air. On obtient à l'issue de cette étape un précurseur de composition $(La_{0,57}Ce_{0,29}Tb_{0,14})PO_4$.

La taille des particules est de $D_{50}= 4,5$ $\mu$m, avec un indice de dispersion de 0,4.

<u>EXEMPLE 1</u> : Synthèse d'un précurseur coeur $LaPO_4$

Dans 500 mL d'une solution d'acide phosphorique $H_3PO_4$ (1,725 mol/L) préalablement amené à pH 1,6 par addition d'ammoniaque, et porté à 60°C, sont ajoutés, en une heure, 500 mL d'une solution de nitrate de lanthane (1,5 mol/L). Le pH au cours de la précipitation est régulé à 1,6 par addition d'ammoniaque.

A l'issue de l'étape de précipitation, le milieu réactionnel est encore maintenu 1 h à 60°C. Le précipité est ensuite aisément récupéré par filtration, lavé à l'eau puis séché à 60°C sous air. La poudre obtenue est ensuite soumise à un traitement thermique à 900°C sous air.

Le produit ainsi obtenu, caractérisé par diffraction des rayons X, est un orthophosphate de lanthane $LaPO_4$, de structure monazite. La taille des particules est de $D_{50}= 5,2$ $\mu$m, avec un indice de dispersion de 0,6. La surface spécifique du produit, mesurée par BET, est de $S_{BET} = 6$ m$^2$/g.

<u>EXEMPLE 2</u> : Synthèse d'un précurseur coeur $LaPO_4$

Dans 500 mL d'une solution d'acide phosphorique $H_3PO_4$ (1,725 mol/L) préalablement amenée à pH 1,9 par addition d'ammoniaque, et portée à 60°C, sont ajoutés, en une heure, 500 mL d'une solution de nitrate de lanthane (1,5 mol/L). Le pH au cours de la précipitation est régulé à 1,9 par addition d'ammoniaque.

A l'issue de l'étape de précipitation, le milieu réactionnel est encore maintenu 1 h à 60°C. Le précipité est ensuite aisément récupéré par filtration, lavé à l'eau puis séché à 60°C sous air. La poudre obtenue est ensuite soumise à un traitement thermique à 900°C sous air.

Le produit ainsi obtenu, caractérisé par diffraction des rayons X, est un orthophosphate de lanthane $LaPO_4$, de structure monazite. La taille des particules est de $D_{50}= 4,3$ $\mu$m, avec un indice de dispersion de 0,4.

La poudre est ensuite calcinée 2h à 1100°C sous air. On obtient alors un phosphate de terre rare de phase monazite, et de taille des particules $D_{50} = 4,9$ $\mu$m, avec un indice de dispersion de 0,4. La surface spécifique BET est de 3 m$^2$/g.

<u>EXEMPLE 3</u> : Synthèse d'un précurseur coeur-coquille $LaPO_4$ - $LaCeTbPO_4$

Dans un bécher de 1 litre, on prépare une solution de nitrates de terres rares (Solution A) comme suit : on mélange 29,37 g d'une solution de $La(NO_3)_3$ à 2,8 M (d = 1,678 g/L), 20,84 g d'une solution de $Ce(NO_3)_3$ à 2,88 M (d = 1,715 g/L), et 12,38 g d'une solution de $Tb(NO_3)_3$ à 2M (d=1,548), et 462 mL d'eau permutée, soit un total de 0,1 mol de nitrates de terres rares, de composition $(La_{0,49}Ce_{0,35}Tb_{0,16})(NO_3)_3$.

Dans un réacteur de 2L, on introduit (Solution B) 340 ml d'eau permutée, à laquelle on ajoute 13,27 g $H_3PO_4$ Normapur 85% (0,115 mole) puis de l'ammoniaque NH40H 28%, pour atteindre un pH = 1,5. La solution est portée à 60 °C.

Dans le pied de cuve ainsi préparé, on ajoute ensuite 23,4 g d'un phosphate de lanthane issu de l'exemple 1. On régule en pH à 1,5 avec $NH_4OH$ 28%. La solution A précédemment préparée est ajoutée sous agitation au mélange avec une pompe péristaltique à 10ml/mn, en température (60°C), et sous régulation de pH = 1,5. Le mélange obtenu est mûri 1 h à 60°C.

A l'issue du mûrissement, la solution présente un aspect blanc laiteux. On laisse refroidir jusqu'à 30°C et l'on vidange le produit. Il est ensuite filtré sur fritté, et lavé par deux volumes d'eau puis séché et calciné 2h à 900°C sous air.

On obtient alors un phosphate de terre rare de phase monazite, présentant deux phases cristallines monazite de compositions distinctes, à savoir $LaPO_4$ et $(La,Ce,Tb)PO_4$.

La taille moyenne des particules est de $D_{50}= 9,0$ $\mu$m, avec un indice de dispersion de 0,5. La morphologie des particules observée par MEB met en évidence la présence d'une structure de type coeur-coquille.

Un cliché de MET (figure 4) a été réalisé sur le produit enrobé en résine, préparé par ultramicrotomie (épaisseur ~100nm) et disposé sur une membrane à trous. Les particules sont vues en coupe. Sur ce cliché, on observe une coupe de particule, dont le coeur est dense et sphérique, avec un diamètre apparent de 0,7 $\mu$m. Le diamètre apparent des coeurs en TEM (microtomie) peut être plus faible que leur diamètre moyen lorsque la coupe n'est pas une section équatoriale de la particule. La particule a un diamètre total d'environ 2,7 $\mu$m, soit une épaisseur de coquille moyenne de 1 $\mu$m. La mesure de l'épaisseur de la coquille n'est en revanche que peu affectée par l'endroit de la particule où est faite la section. Enfin, on observe clairement la morphologie des particules en oursin.

Le tableau 1 résume les valeurs en pourcentages atomiques relevées pour les éléments P, La, Ce et Tb sur la particule. La particule a une composition globale molaire en terres rares mesurée par EDS de $La_{0,67}Ce_{0,23}Tb_{0,10}$, soit 11 % en poids en oxyde de terbium ($Tb_4O_7$) par rapport à la somme des oxydes de terres rares.

Tableau 1 : Composition chimique de la particule

| Particule | P | La | Ce | Tb |
|---|---|---|---|---|
| Spectre 1 | 47,0 | 35,6 | 12,2 | 5,3 |
| Spectre 2 | 46,3 | 35,8 | 12,3 | 5,7 |
| moyenne | 46,7 | 35,7 | 12,3 | 5,5 |

Le tableau 2 résume les valeurs relevées pour les éléments P, La, Ce et Tb sur le coeur. Le coeur a une composition globale molaire en terres rares mesurée par EDS de $La_{0,95}Ce_{0,04}Tb_{0,01}$, soit 1% en poids en oxyde de terbium ($Tb_4O_7$) par rapport à la somme des oxydes de terres rares.

Tableau 2 : Composition chimique du coeur

| Coeur | P | La | Ce | Tb |
|---|---|---|---|---|
| Spectre 1 | 47,0 | 51,0 | 1,4 | 0,5 |
| Spectre 2 | 46,3 | 50,1 | 2,5 | 1,1 |
| moyenne | 46,7 | 50,5 | 2,0 | 0,9 |

Le tableau 3 résume les valeurs relevées pour les éléments P, La, Ce et Tb sur la coquille. La coquille a une composition globale molaire en terres rares mesurée par EDS de $La_{0,46}Ce_{0,37}Tb_{0,17}$, soit 19% en poids en oxyde de terbium ($Tb_4O_7$) par rapport à la somme des oxydes de terres rares.

Tableau 3 : Composition chimique de la coquille

| Coquille | P | La | Ce | Tb |
|---|---|---|---|---|
| Spectre 1 | 48,0 | 24,5 | 19,4 | 8,2 |
| Spectre 2 | 50,2 | 22,8 | 18,2 | 8,9 |
| moyenne | 49,1 | 23,7 | 18,8 | 8,6 |

La MET-EDS met clairement en évidence une structure coeur-coquille, avec un coeur très peu dopé en Tb, et une coquille fortement dopée en Tb.

EXEMPLE 4 : Synthèse d'un précurseur coeur-coquille $LaPO_4$ - $LaCeTbPO_4$

Dans un bécher de 1 litre, on prépare une solution de nitrates de terres rares (Solution A) comme suit : on mélange 29.37 g d'une solution de $La(NO_3)_3$ à 2,8 M (d = 1,678 g/L), 20.84 g d'une solution de $Ce(NO_3)_3$ à 2,88 M (d = 1,715 g/L), et 12.38 g d'une solution de $Tb(NO_3)_3$ à 2M (d=1,548), et 462 mL d'eau permutée, soit un total de 0,1 mol de nitrates de terres rares, de composition $(La_{0,49}Ce_{0,35}Tb_{0,16})(NO_3)_3$.

Dans un réacteur de 2 litres, on introduit (Solution B), on introduit 340 ml d'eau permutée, à laquelle on ajoute 13.27 g $H_3PO_4$ Normapur 85% (0,115 mole) puis de l'ammoniaque $NH_4OH$ 28%, pour atteindre un pH = 1,5. La solution est portée à 60°C. Dans le pied de cuve ainsi préparé, on ajoute ensuite 23.4 g d'un phosphate de lanthane issu de l'exemple 2. On régule en pH à 1,5 avec $NH_4OH$ 28%. La solution A précédemment préparée est ajoutée sous agitation au mélange avec une pompe péristaltique à 10ml/mn, en température (60°C), et sous régulation de pH = 1,5. Le mélange obtenu est mûri 1 h à 60°C. A l'issue du mûrissement, la solution présente un aspect blanc laiteux. On laisse refroidir jusqu'à 30°C et l'on vidange le produit. Il est ensuite filtré sur fritté, et lavé par deux volumes d'eau, puis séché et calciné 2h à 900°C sous air.

On obtient alors un phosphate de terre rare de phase monazite, présentant deux phases cristallines monazite de compositions distinctes, à savoir $LaPO_4$ et $(La,Ce,Tb)PO_4$. La taille des particules est de $D_{50}= 6,0 \mu m$, avec un indice de dispersion de 0,5.

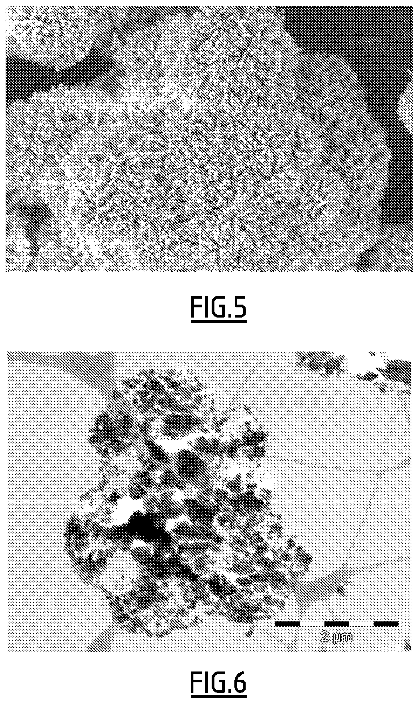

Le produit présente par observation en MEB une morphologie typique en épine d'oursins denses. Toutes les particules de coeur sont recouvertes par la couche de LAP. Un cliché de MET (figure 6) a été réalisé sur le produit enrobé en résine, préparé par ultramicrotomie (épaisseur ~100 nm) et disposé sur une membrane à trous. Les particules sont vues en coupe. Sur ce cliché, on observe une coupe de particule, dont le coeur est sphérique, avec un diamètre apparent de 1,9 $\mu m$. Le diamètre apparent des coeurs en TEM (microtomie) peut apparaître plus faible que leur diamètre moyen lorsque la coupe n'est pas une section équatoriale de la particule.

La particule a un diamètre total d'environ 4,2 $\mu m$, soit une épaisseur de coquille moyenne de 1,1 $\mu m$. La mesure de l'épaisseur de la coquille n'est en revanche que peu affectée par l'endroit de la particule où est faite la section. Enfin, on observe clairement la morphologie des particules en oursin (voir figure 5).

Les mesures de compositions chimiques par EDS sont réalisées par analyse X, sur des clichés effectués par STEM HAADF. Les teneurs sont estimées en% atomique. La résolution spatiale pour la composition est < 10 nm. On identifie clairement par EDS le coeur de l'écorce.

Le tableau 4 résume les valeurs relevées pour les éléments P, La, Ce et Tb sur le coeur. Le coeur a une composition globale molaire mesurée par EDS de $La_{0,98}Ce_{0,01}Tb_{0,01}$, soit 1% wt en poids en oxyde de terbium ($Tb_4O_7$) par rapport à la somme des oxydes de terres rares.

Tableau 4 : Composition chimique du coeur

| Coeur | P | La | Ce | Tb |
|---|---|---|---|---|
| Spectre 1 | 47,1 | 51,8 | 1,1 | 0,1 |
| Spectre 2 | 47,6 | 51,3 | 0,3 | 0,8 |
| moyenne | 47,4 | 51,6 | 0,7 | 0,5 |

Le tableau 5 résume les valeurs relevées pour les éléments P, La, Ce et Tb sur la coquille. La coquille a une composition globale molaire en terres rares mesurée par EDS de $La_{0,48}Ce_{0,34}Tb_{0,18}$, soit 20% en poids en oxyde de terbium ($Tb_4O_7$) par rapport à la somme des oxydes de terres rares.

Tableau 5 : Composition chimique de la coquille

| Coquille | P | La | Ce | Tb |
|---|---|---|---|---|
| Spectre 1 | 49,6 | 24,3 | 16,8 | 9,2 |
| Spectre 2 | 48,2 | 24,8 | 17,9 | 9,2 |
| moyenne | 48,9 | 24,6 | 16,9 | 9,2 |

La MET-EDS met clairement en évidence une structure coeur-coquille, avec un coeur très peu dopé en Tb, et une coquille fortement dopée en Tb.

EXEMPLE 5 : Synthèse d'un précurseur coeur-coquille $LaPO_4$ - $LaCeTbPO_4$

Dans un bécher de 1 litre, on prépare une solution de nitrates de terres rares (Solution A) comme suit : on mélange 146,85 g d'une solution de $La(NO_3)_3$ à 2,8 M (d = 1,678 g/L), 104,2 g d'une solution de $Ce(NO_3)_3$ à 2,88 M (d = 1,715 g/L), 61,9 g d'une solution de $Tb(NO_3)_3$ à 2M (d=1,548), qu'on complète à 500 mL par ajout d'eau permutée, soit un total de 0,5 mol de nitrates de terres rares, de composition $(La_{0,49}Ce_{0,35}Tb_{0,16})(NO_3)_3$.

Dans un réacteur de 2 litres, on introduit (Solution B), on introduit 400 ml d'eau permutée, à laquelle on ajoute 66,35 g $H_3PO_4$ Normapur 85% (0,115 mole) puis de l'ammoniaque $NH_4OH$ 28%, pour atteindre un pH = 1,5. La solution est portée à 60°C.

Dans le pied de cuve ainsi préparé, on ajoute ensuite 125 g d'une poudre de phosphate de lanthane $LaPO_4$ issu de l'exemple 1. On régule en pH à 1,5 avec $NH_4OH$ PROLABO Normapur 28%. La solution A précédemment préparée est ajoutée sous agitation au mélange avec une pompe péristaltique à 10ml/mn, en température (60°C), et sous régulation de pH = 1,5. Le mélange obtenu est mûri 1 h à 60°C. A l'issue du mûrissement, la solution présente un aspect blanc laiteux. On laisse refroidir jusqu'à 30°C et l'on vidange le produit. Il est ensuite filtré sur fritté, et lavé par deux volumes d'eau puis séché et calciné 2 heures à 900°C sous air. On obtient alors un phosphate de terre rare de phase monazite, présentant deux phases cristallines monazite de compositions distinctes, à savoir $LaPO_4$ et $(La,Ce,Tb)PO_4$.

La taille moyenne des particules est de $D_{50}= 6,2$ $\mu$m, avec un indice de dispersion de 0,5. Le produit présente par observation en MEB une morphologie typique en choux-fleurs sphériques et denses. Toutes les particules de coeur sont recouvertes par la couche de LAP.

EXEMPLE 6 : Obtention d'un luminophore LAP de référence

La poudre de précurseur obtenue à l'exemple de comparaison a été calcinée pendant 2h à 1000°C sous atmosphère $Ar/H_2$ (1% d'hydrogène). On obtient à l'issue de cette étape un luminophore LAP. La taille moyenne des particules est de $D_{50}= 4,5$ $\mu$m, avec un indice de dispersion de 0,4.

La composition du produit est $(La_{0,57}Ce_{0,29}Tb_{0,14})PO_4$, soit 15% en poids en oxyde de terbium ($Tb_4O_7$) par rapport à la somme des oxydes de terres rares. Ceci correspond à l'utilisation de 110 g de $Tb_4O_7$ par kg de luminophore fini.

EXEMPLE 7 : Obtention d'un luminophore coeur-coquille $LaPO_4$ - $LaCeTbPO_4$

La poudre de précurseur obtenue à l'exemple 3 est calcinée pendant 2h à 1000°C sous atmosphère Ar / $H_2$ (1% d'hydrogène). On obtient à l'issue de cette étape un luminophore coeur-coquille. La taille moyenne des particules est de $D_{50}= 8,9$ $\mu$m, avec un indice de dispersion de 0,5.

EXEMPLE 8 : Obtention d'un luminophore coeur-coquille $LaPO_4$ - $LaCeTbPO_4$

La poudre de précurseur obtenue à l'exemple 4 est calcinée pendant 2h à 1000°C sous atmosphère Ar / $H_2$ (1% d'hydrogène). On obtient à l'issue de cette étape un luminophore coeur-coquille. La taille des particules est de $D_{50}= 5,9$ $\mu$m, avec un indice de dispersion de 0,5.

EXEMPLE 9 : Obtention d'un luminophore coeur-coquille $LaPO_4$ - $LaCeTbPO_4$

La poudre de précurseur obtenue à l'exemple 5 est calcinée pendant 2h à 1000°Csous atmosphère Ar / $H_2$ (1% d'hydrogène). On obtient à l'issue de cette étape un luminophore coeur-coquille. La taille des particules est de $D_{50}=6,3$ $\mu$m, avec un indice de dispersion de 0,5.

Tableau 6 : Rendement de photoluminescence (PL)

|  | Masse de terbium utilisée | PL |
|---|---|---|
| Exemple 6* | 110 g de $Tb_4O_7$ / kg de luminophore fini. | 100 |
| Exemple 7 | 66 g de $Tb_4O_7$ / kg de luminophore fini. | 99,8 |
| Exemple 8 | 66 g de $Tb_4O_7$ / kg de luminophore | 100,1 |
| Exemple 9 | 66 g de $Tb_4O_7$ / kg de luminophore | 100,3 |
| * Exemple de comparaison | | |

Le rendement de photoluminescence (PL) des luminophores obtenus dans les exemples 7, 8 et 9 selon l'invention est comparé au rendement du luminophore obtenu à l'exemple 6, lequel est pris comme référence, avec un rendement de photoluminescence PL = 100. Les mesures sont faites par intégration du spectre d'émission entre 450 nm et 700 nm, sous excitation à 254 nm, mesuré sur un spectrophotomètre Jobin -Yvon.

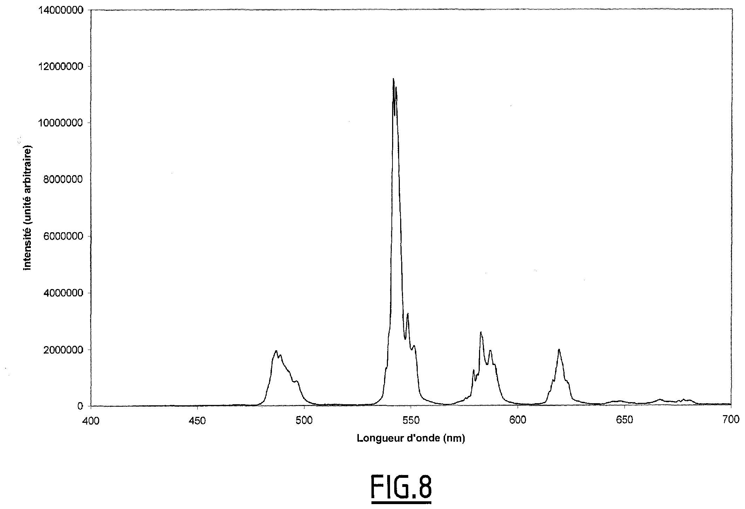

La figure 8 montre un spectre d'émission du luminophore.

EXEMPLE 10 : Synthèse d'un précurseur coeur coquille $YBO_3$ - $LaCeTbPO_4$

Dans un bécher de 1 litre, on prépare une solution de nitrates de terres rares (Solution A) comme suit : on mélange 29,37 g d'une solution de $La(NO_3)_3$ à 2,8 M (d = 1,678 g/L), 20,84 g d'une solution de $Ce(NO_3)_3$ à 2,88 M (d = 1,715 g/L), et 12,38 g d'une solution de $Tb(NO_3)_3$ à 2M (d=1,548), et 462 mL d'eau permutée, soit un total de 0,1 mol de nitrates de terres rares, de composition $(La_{0,49}Ce_{0,35}Tb_{0,16})(NO_3)_3$.

Dans un réacteur de 2 litres, on introduit (Solution B), on introduit 340 ml d'eau permutée, à laquelle on ajoute

13,27 g $H_3PO_4$ Normapur 85% (0,115 mole) puis de l'ammoniaque $NH_4OH$ 28%, pour atteindre un pH = 1,5. La solution est portée à 70°C.

Dans le pied de cuve ainsi préparé, on ajoute ensuite 23,4 g d'un borate d'yttrium $YBO_3$ de taille moyenne en granulométrie laser $D_{50}$ = 3,2 $\mu$m. On régule en pH à 2,1 avec $NH_4OH$ 28%.

La solution A précédemment préparée est ajoutée sous agitation au mélange avec une pompe péristaltique à 10ml/mn, en température (70°C), et sous régulation de pH = 2,1. Le mélange obtenu est mûri 1 heure à 70°C.

A l'issue du temps, la solution présente un aspect blanc laiteux. On laisse refroidir jusqu'à 30°C et l'on vidange le produit. Il est ensuite filtré sur fritté, et lavé par deux volumes d'eau, puis séché et calciné 2 heures à 900°C sous air.

On obtient alors un phosphate de terre rare de phase monazite de composition (La,Ce,Tb)$PO_4$, déposé sur un coeur $YBO_3$.

La taille moyenne des particules, mesurée par granulométrie laser Coulter, est de 5,1 $\mu$m, avec un indice de dispersion de 0,4.

EXEMPLE 11

Cet exemple concerne la préparation d'un coeur en $LaPO_4$ dense.

Dans 500 mL d'une solution d'acide phosphorique $H_3PO_4$ (1,725 mol/L) préalablement amenée à pH 1,5 par addition d'ammoniaque, et portée à 60°C, sont ajoutés, en une heure, 500 mL d'une solution de nitrate de lanthane (1,5 mol/L). Le pH au cours de la précipitation est régulé à 1,5 par addition d'ammoniaque.

A l'issue de l'étape de précipitation, le milieu réactionnel est encore maintenu 1 h à 60°C. Le précipité est ensuite aisément récupéré par filtration, lavé à l'eau puis séché à 60°C sous air. La poudre obtenue est ensuite soumise à un traitement thermique à 900°C sous air.

170 g de cette poudre est mélangé soigneusement au turbulat avec 1,7 g de LiF pendant 30 minutes. Le mélange est ensuite calciné sous une atmosphère réductrice (mélange 95% Ar / 5% H2), pendant 2h à 1000°C. Le produit obtenu est alors lavé soigneusement à chaud (80°C) dans un mélange eau / acide nitrique.

On obtient alors une poudre de phosphate de terre rare $LaPO_4$, de phase monazite, et de taille des particules $D_{50}$ = 5,6 $\mu$m, avec un indice de dispersion de 0,6. La surface spécifique du produit, mesurée par BET est de $S_{BET}$ = 0,6 m$^2$/g.

EXEMPLE 12

Cet exemple concerne aussi la préparation d'un coeur en $LaPO_4$ dense.

Dans 500 mL d'une solution d'acide phosphorique $H_3PO_4$ (1,725 mol/L) préalablement amenée à pH 1,9 par addition d'ammoniaque, et portée à 60°C, sont ajoutés, en une heure, 500 mL d'une solution de nitrate de lanthane (1,5 mol/L). Le pH au cours de la précipitation est régulé à 1,9 par addition d'ammoniaque.

A l'issue de l'étape de précipitation, le milieu réactionnel est encore maintenu 1 h à 60°C. Le précipité est ensuite aisément récupéré par filtration, lavé à l'eau puis séché à 60°C sous air. La poudre obtenue est ensuite soumise à un traitement thermique à 900°C sous air.

170 g de cette poudre sont mélangés soigneusement au turbulat, pendant 30 minutes, avec 34 g de NaCl. Le mélange résultant est ensuite calciné à 900°C pendant 4h sous air. Le produit obtenu est ensuite lavé pendant 4h à l'eau chaude (80°C) sous agitation, puis filtré et séché. La poudre est ensuite désagglomérée par un broyage à billes au tourne-jarre pendant 8 heures.

Le produit ainsi obtenu, caractérisé par diffraction des rayons X, est un orthophosphate de lanthane $LaPO_4$, de structure monazite. La taille des particules est de $D_{50}$= 4,4 $\mu$m, avec un indice de dispersion de 0,6.

La surface spécifique du produit, mesurée par BET est de $S_{BET}$ = 0,5 m$^2$/g.

EXEMPLE 13 : Synthèse d'un précurseur coeur-coquille $LaPO_4$ - $LaCeTbPO_4$ sur le coeur de l'exemple 11

Dans un bécher de 1 litre, on prépare une solution de nitrates de terres rares (Solution A) comme suit : on mélange 117,48 g d'une solution de $La(NO_3)_3$ à 2,8 M (d = 1,678 g/L), 83,36 g d'une solution de $Ce(NO_3)_3$ à 2,88 M (d = 1,715 g/L), et 49,52 g d'une solution de $Tb(NO_3)_3$ à 2M (d=1,548), et 349 mL d'eau permutée, soit un total de 0,4 mol de nitrates de terres rares, de composition $(La_{0,49}Ce_{0,35}Tb_{0,16})(NO_3)_3$.

Dans un réacteur de 2L, on introduit (Solution B), 400 ml d'eau permutée, à laquelle on ajoute 53,06 g $H_3PO_4$ Normapur 85% puis de l'ammoniaque $NH_4OH$ 28%, pour atteindre un pH = 1,5. La solution est portée à 60°C. Dans le pied de cuve ainsi préparé, on ajoute ensuite 100 g d'un phosphate de lanthane issu de l'exemple 11. On régule en pH à 1,5 avec de l'ammoniaque $NH_4OH$ à 6 mol/L. La solution A précédemment préparée est ajoutée sous agitation au mélange avec une pompe péristaltique à 10ml/mn, en température (60°C), et sous régulation de pH = 1,5. Le mélange obtenu est mûri 1 h à 60°C. A l'issue du mûrissement, la solution présente un aspect blanc laiteux. On laisse refroidir jusqu'à 30°C et l'on vidange le produit. Il est ensuite filtré sur fritté, et lavé par deux volumes d'eau, puis séché et calciné 2h à 900°C sous air.

On obtient alors un phosphate de terre rare de phase monazite, présentant deux phases cristallines monazite de compositions distinctes, à savoir $LaPO_4$ et $(La,Ce,Tb)PO_4$. La taille des particules est de $D_{50}$= 9,2 $\mu$m, avec un indice de dispersion de 0,5.

EXEMPLE 14 : Synthèse d'un précurseur coeur-coquille $LaPO_4$ - $LaCeTbPO_4$ sur le coeur de l'exemple 12

Dans un bécher de 1 litre, on prépare une solution de nitrates de terres rares (Solution A) comme suit : on mélange 146,85 g d'une solution de $La(NO_3)_3$ à 2,8 M (d = 1,678 g/L), 104,2 g d'une solution de $Ce(NO_3)_3$ à 2,88 M (d = 1,715 g/L), et 61,9 g d'une solution de $Tb(NO_3)_3$ à 2M (d=1,548), et 312 mL d'eau permutée, soit un total de 0,5 mol de nitrates de terres rares, de composition $(La_{0,49}Ce_{0,35}Tb_{0,16})(NO_3)_3$.

Dans un réacteur de 2L, on introduit (Solution B), 400 ml d'eau permutée, à laquelle on ajoute 69,2 g de $H_3PO_4$ Normapur 85% (0,6 mole) puis de l'ammoniaque $NH_4OH$ 28%, pour atteindre un pH = 1,4. La solution est portée à 60°C. Dans le pied de cuve ainsi préparé, on ajoute ensuite 83 g d'un phosphate de lanthane issu de l'exemple 12. On régule en pH à 1,5 avec de l'ammoniaque $NH_4OH$ à 6 mol/L. La solution A précédemment préparée est ajoutée sous agitation au mélange avec une pompe péristaltique à 10ml/mn, en température (60°C), et sous régulation de pH = 1,5. Le mélange obtenu est mûri 1 h à 60°C. A l'issue du mûrissement, la solution présente un aspect blanc laiteux. On laisse refroidir jusqu'à 30°C et l'on vidange le produit. Il est ensuite filtré sur fritté, et lavé par deux volumes d'eau, puis séché et calciné 2h à 900°C sous air.

On obtient alors un phosphate de terre rare de phase monazite, présentant deux phases cristallines monazite de compositions distinctes, à savoir $LaPO_4$ et $(La,Ce,Tb)PO_4$. La taille des particules est de $D_{50}$= 7,2 $\mu$m, avec un indice de dispersion de 0,3.

EXEMPLE 15 : Synthèse d'un luminophore coeur-coquille $LaPO_4$ - $LaCeTbPO_4$ à partir du précurseur de l'exemple 3

La poudre de précurseur obtenue à l'exemple 3 (200 g) est ensuite mélangée soigneusement au turbulat, pendant 30 minutes, avec 1% en poids de $Li_2B_4O_7$ (2 g). Ce mélange est ensuite calciné sous atmosphère $Ar/H_2$ (5% d'hydrogène), pendant 2h à 1000°C. Le produit obtenu est alors lavé à l'eau chaude, puis filtré et séché. On obtient à l'issue de cette étape un luminophore LAP. La taille moyenne des particules est de $D_{50}$= 7,1 $\mu$m, avec un indice de dispersion de 0,5.

La composition du produit est $(La_{0,75}Ce_{0,18}Tb_{0,08})PO_4$, soit 9% en poids en oxyde de terbium $(Tb_4O_7)$ par rapport à la somme des oxydes de terres rares.

EXEMPLE 16 : Synthèse d'un luminophore coeur-coquille $LaPO_4$ - $LaCeTbPO_4$ à partir du précurseur de l'exemple 13

La poudre de précurseur obtenue à l'exemple 13 (150 g) est ensuite mélangée soigneusement au turbulat, pendant 30 minutes, avec 1% en poids de $Li_2B_4O_7$ (1,5 g). Ce mélange est ensuite calciné sous atmosphère $Ar/H_2$ (5% d'hydrogène), pendant 2h à 1000°C. Le produit obtenu est alors lavé à l'eau chaude, puis filtré et séché. On obtient à l'issue de cette étape un luminophore LAP. La taille moyenne des particules est de $D_{50}$= 7,1 $\mu$m, avec un indice de dispersion de 0,5.

La composition du produit est $(La_{0,75}Ce_{0,18}Tb_{0,08})PO_4$, soit 9% en poids en oxyde de terbium $(Tb_4O_7)$ par rapport à la somme des oxydes de terres rares.

EXEMPLE 17 : Synthèse d'un luminophore coeur-coquille $LaPO_4$ - $LaCeTbPO_4$ à partir du précurseur de l'exemple 14

La poudre de précurseur obtenue à l'exemple 14 (150 g) est ensuite mélangée soigneusement au turbulat, pendant 30 minutes, avec 1% en poids de $Li_2B_4O_7$ (1,5 g). Ce mélange est ensuite calciné sous atmosphère $Ar/H_2$ (5% d'hydrogène), pendant 2h à 1000°C. Le produit obtenu est alors lavé à l'eau chaude, puis filtré et séché. On obtient à l'issue de cette étape un luminophore LAP. La taille moyenne des particules est de $D_{50}$= 8,1 $\mu$m, avec un indice de dispersion de 0,4.

Le produit est soumis à une désagglomération par broyage à billes pendant 20 minutes. La taille moyenne des particules est alors de $D_{50}$= 5,7 $\mu$m.

La composition du produit est $(La_{0,69}Ce_{0,21}Tb_{0,10})PO_4$, soit 10,8% en poids en oxyde de terbium $(Tb_4O_7)$ par rapport à la somme des oxydes de terres rares.

Le rendement de photoluminescence (PL) des luminophores obtenus dans les exemples 7, 8 et 9 selon l'invention est comparé au rendement du luminophore obtenu à l'exemple 6, lequel est pris comme référence, avec un rendement de photoluminescence PL = 100. Les mesures sont faites par intégration du spectre d'émission entre 450 nm et 700 nm, sous excitation à 254 nm, mesuré sur un spectrophotomètre Jobin -Yvon.

La figure 9 est un cliché MEB du luminophore obtenu.


EXEMPLE 18 : Synthèse d'un précurseur coeur-coquille $Al_2O_3$ - $LaCeTbPO_4$

Dans un bécher de 1 litre, on prépare une solution de nitrates de terres rares (Solution A) comme suit : on mélange 146,85 g d'une solution de $La(NO_3)_3$ à 2,8 M (d = 1,678 g/L), 104,2 g d'une solution de $Ce(NO_3)_3$ à 2,88 M (d = 1,715 g/L), et 61,9 g d'une solution de $Tb(NO_3)_3$ à 2M (d=1,548), et 312 mL d'eau permutée, soit un total de 0,5 mol de nitrates de terres rares, de composition $(La_{0,49}Ce_{0,35}Tb_{0,16})(NO_3)_3$.

Dans un réacteur de 2L, on introduit (Solution B), 400 ml d'eau permutée, à laquelle on ajoute 69,2 g de $H_3PO_4$ Normapur 85% (0,6 mole) puis de l'ammoniaque $NH_4OH$ 28%, pour atteindre un pH = 1,4. La solution est portée à 60°C. Dans le pied de cuve ainsi préparé, on ajoute ensuite 34 g d'alumine alpha $\alpha$-$Al_2O_3$ de granulométrie $D_{50}$ = 4,1 $\mu$m et de surface spécifique BET de 0,6 m²/g. On régule en pH à 1,4 avec de l'ammoniaque $NH_4OH$ à 6 mol/L. La solution A précédemment préparée est ajoutée sous agitation au mélange avec une pompe péristaltique à 10ml/mn, en température (60°C), et sous régulation de pH = 1,4. Le mélange obtenu est mûri 1h à 60°C. A l'issue du mûrissement, la solution présente un aspect blanc laiteux. On laisse refroidir jusqu'à 30°C et l'on vidange le produit. Il est ensuite filtré sur fritté, et lavé par deux volumes d'eau, puis séché et calciné 2h à 900°C sous air.

On obtient alors un composé mixte Alumine / phosphate de terre rare de phase monazite, présentant deux phases cristallines compositions distinctes, à savoir $Al_2O_3$ et $(La,Ce,Tb)PO_4$. La taille des particules est de $D_{50}$= 7,8 $\mu$m, avec un indice de dispersion de 0,4.


EXEMPLE 19 : Synthèse d'un luminophore coeur-coquille $Al_2O_3$ - $LaCeTbPO_4$ à partir du précurseur de l'exemple 18

La poudre de précurseur obtenue à l'exemple 18 (150 g) est ensuite mélangée soigneusement au turbulat, pendant 30 minutes, avec 1% en poids de $Li_2B_4O_7$ (1,5 g). Ce mélange est ensuite calciné sous atmosphère $Ar/H_2$ (5% d'hydrogène), pendant 2h à 1000°C. Le produit obtenu est alors lavé à l'eau chaude, puis filtré et séché. On obtient à l'issue de cette étape un luminophore LAP. La taille moyenne des particules est de $D_{50}$= 8,1 $\mu$m, avec un indice de dispersion de 0,4.

La composition du produit est 0,4 $Al_2O_3$ - 0,6 $(La_{0,49}Ce_{0,35}Tb_{0,16})PO_4$.


EXEMPLE 20 : Synthèse d'un précurseur coeur coquille $YBO_3$ - $LaCeTbPO_4$

Dans un bécher de 1 litre, on prépare une solution de nitrates de terres rares (Solution A) comme suit : on mélange 146,85 g d'une solution de $La(NO_3)_3$ à 2,8 M (d = 1,678 g/L), 104,2 g d'une solution de $Ce(NO_3)_3$ à 2,88 M (d = 1,715 g/L), et 61,9 g d'une solution de $Tb(NO_3)_3$ à 2M (d=1,548), et 312 mL d'eau permutée, soit un total de 0,5 mol de nitrates de terres rares, de composition $(La_{0,49}Ce_{0,35}Tb_{0,16})(NO_3)_3$.

Dans un réacteur de 2L, on introduit (Solution B), 400 ml d'eau permutée, à laquelle on ajoute 69,2 g de $H_3PO_4$ Normapur 85% (0,6 mole) puis de l'ammoniaque $NH_4OH$ 28%, pour atteindre un pH = 1,4. La solution est portée à 60°C. Dans le pied de cuve ainsi préparé, on ajoute ensuite 48,7 g de borate de terres rares $YBO_3$ préalablement calciné à 1000°C sous air en présence d'un excès d'acide borique, et possédant une granulométrie $D_{50}$ = 3,1 $\mu$m et de surface spécifique BET de 0,7 m²/g. On régule en pH à 1,6 avec de l'ammoniaque $NH_4OH$ à 6 mol/L. La solution A précédemment préparée est ajoutée sous agitation au mélange avec une pompe péristaltique à 10ml/mn, en température (60°C), et sous régulation de pH = 1,6. Le mélange obtenu est mûri 1 h à 60°C. A l'issue du mûrissement, la solution présente un aspect blanc laiteux. On laisse refroidir jusqu'à 30°C et l'on vidange le produit. Il est ensuite filtré sur fritté, et lavé par deux volumes d'eau, puis séché et calciné 2h à 900°C sous air.

On obtient alors un composé mixte borate de terre rare / phosphate de terre rare de phase monazite, présentant deux phases cristallines compositions distinctes, à savoir $YBO_3$ et $(La,Ce,Tb)PO_4$. La taille des particules est de $D_{50}$= 5,2 $\mu$m, avec un indice de dispersion de 0,4.


EXEMPLE 21 : Obtention d'un luminophore coeur-coquille YB03 - $LaCeTbPO_4$ à partir du précurseur de l'exemple 20

La poudre de précurseur obtenue à l'exemple 20 (100 g) est ensuite mélangée soigneusement au turbulat, pendant 30 minutes, avec 1% en poids de $Li_2B_4O_7$ (1 g). Ce mélange est ensuite calciné sous atmosphère $Ar/H_2$ (5% d'hydrogène), pendant 2h à 1000°C. Le produit obtenu est alors lavé à l'eau chaude, puis filtré et séché. On obtient à l'issue de cette étape un luminophore LAP. La taille moyenne des particules est de $D_{50}$= 8,1 $\mu$m, avec un indice de dispersion de 0,4.

La composition du produit est 0,4 $YBO_3$ - 0,6 $(La_{0,49}Ce_{0,35}Tb_{0,16})PO_4$.

<u>EXEMPLE 22 comparatif</u>

La poudre de précurseur obtenue selon le premier exemple donné ci-dessus (exemple comparatif) (170 g) est mélangée soigneusement au turbulat, pendant 30 minutes, avec 1% en poids de $Li_2B_4O_7$ (1,7 g). Ce mélange est ensuite calciné pendant sous atmosphère $Ar/H_2$ (5% d'hydrogène pendant 2h à 1000°C. Le produit obtenu est alors lavé à l'eau chaude, puis filtré et séché. On obtient à l'issue de cette étape un luminophore LAP. La taille moyenne des particules est de $D_{50}$= 5,1 $\mu$m, avec un indice de dispersion de 0,5.

La composition du produit est $(La_{0,57}Ce_{0,29}Tb_{0,14})PO_4$, soit 15% en poids en oxyde de terbium $(Tb_4O_7)$ par rapport à la somme des oxydes de terres rares. Ceci correspond à l'utilisation de 110 g de $Tb_4O_7$ par kg de luminophore fini.

Le tableau 7 ci-dessous indique les rendements de photoluminescence (PL) des luminophores qui ont fait l'objet des exemples précédents. Le rendement est comparé à celui du luminophore obtenu à l'exemple 22, lequel est pris comme référence, avec un rendement de photoluminescence PL = 100. Les mesures sont faites par intégration du spectre d'émission entre 450 nm et 700 nm, sous excitation à 254 nm, mesuré sur un spectrophotomètre Jobin-Yvon.

Tableau 7

|  | Masse de terbium utilisée | PL |
|---|---|---|
| Exemple 22 | 110 g de $Tb_4O_7$ / kg de luminophore fini. | 100 |
| Exemple 15 | 66 g de $Tb_4O_7$ / kg de luminophore fini. | 89 |
| Exemple 16 | 66 g de $Tb_4O_7$ / kg de luminophore | 97 |
| Exemple 17 | 79,2 g de $Tb_4O_7$ / kg de luminophore | 100 |
| Exemple 19 | 99 g de $Tb_4O_7$ / kq de luminophore | 103 |
| Exemple 21 | 91 g de $Tb_4O_7$ / kq de luminophore | 101 |

**Revendications**

1. Précurseur de luminophore (P) comprenant des particules ayant un diamètre moyen compris entre 1,5 et 15 microns, ces particules comprenant :

   - un coeur minéral non luminophore ;
   - une coquille à base d'un phosphate mixte de lanthane et/ou cérium, éventuellement dopé par du terbium, recouvrant de façon homogène le coeur minéral sur une épaisseur supérieure ou égale à 300 nm.

2. Précurseur de luminophore selon la revendication 1, où la coquille à base d'un phosphate mixte de lanthane et/ou cérium, éventuellement dopé par du terbium recouvre le coeur minéral sur une épaisseur comprise entre 0,3 et 1 micron, par exemple entre 0,5 et 0,8 micron.

3. Précurseur selon la revendication 1 ou 2 dans lequel le coeur minéral non luminophore est à base :

   - d'un phosphate de lanthane ; ou
   - d'un borate de formule $YBO_3$ ou $GdBO_3$.

4. Précurseur de luminophore selon la revendication 1 où 2 où le coeur minéral des particules du précurseur (P) est essentiellement constitué d'un phosphate de lanthane $LaPO_4$.

5. Précurseur de luminophore selon l'une des revendications précédentes, où le coeur minéral des particules a été densifié par la technique des sels fondus.

6. Précurseur de luminophore selon l'une des revendications précédentes, où le phosphate mixte de la coquille répond à la formule générale (1) suivante :

$$La_{(1-x-y)}Ce_xTb_yPO_4 \qquad (1)$$

dans laquelle :

x est compris, inclusivement, entre 0 et 0,95 ;
y est compris, inclusivement, entre 0,05 et 0,3 ; et

la somme (x+y) est inférieure ou égale à 1.

**7.** Précurseur de luminophore selon l'une des revendications précédentes, où le phosphate mixte de la coquille répond à la formule générale (Ib) suivante :

$$La_{(1-y)}Tb_yPO_4 \qquad (Ib)$$

dans laquelle :

y est compris, inclusivement, entre 0,05 et 0,3.

ou encore à la formule (Ie) suivante :

$$La_{(1-y)}Ce_yPO_4 \qquad (Ic)$$

dans laquelle :

y est compris, inclusivement, entre 0,01 et 0,3.

**8.** Précurseur de luminophore selon l'une des revendications précédentes, où le coeur minéral présente une surface spécifique d'au plus 1 $m^2/g$, plus particulièrement d'au plus 0,6 $m^2/g$

**9.** Procédé de préparation d'un précurseur de luminophore (P) selon l'une quelconque des revendications 1 à 8 comprenant les étapes successives (A) et (B) suivantes, dans lesquelles :

(A) on additionne une solution aqueuse (s) de sels solubles de lanthane et/ou cérium, et éventuellement de terbium, de façon progressive et continue, et sous agitation, à un milieu aqueux (m) ayant un pH initial ($pH^0$) de 1 à 5 et comprenant initialement :

- des particules ($p^0$) à base d'un matériau minéral non luminophore, à l'état dispersé; et
- des ions phosphates,

en maintenant le pH du milieu réactionnel à une valeur sensiblement constante au cours de la réaction de précipitation du phosphate mixte qui s'ensuit, avec des variations du pH d'au plus 0,5 unité de pH, ce par quoi on obtient des particules comprenant un coeur à base d'un matériaux minéral non luminophore à la surface duquel est déposé un phosphate mixte de lanthane et/ou cérium, et éventuellement de terbium, puis
(B) on sépare les particules obtenues du milieu réactionnel, et on les traite thermiquement à une température de 400 à 900°C, de préférence au moins égale à 600°C.

**10.** Procédé selon la revendication 9, où les particules ($p^0$) sont des particules à base de phosphate de lanthane non dopé.

**11.** Procédé selon l'une des revendications 9 ou 10, où, dans l'étape (A), les ions phosphates sont initialement présents dans le mélange (m) sous forme de phosphates d'ammonium.

**12.** Procédé selon l'une quelconque des revendications 9 à 11, où, dans l'étape (A), les ions phosphates sont introduits en excès stoechiométrique dans le milieu (m), avec un rapport molaire initial phosphate / (La+Ce+Tb) supérieur à 1, de préférence compris entre 1,1 et 3.

**13.** Procédé selon l'une quelconque des revendications 9 à 12, où l'étape (A) comporte en outre une étape de mûrissement, à l'issue de l'addition de la totalité de la solution (s) et préalablement à l'étape (B).

**14.** Procédé de préparation d'un luminophore (L) à partir d'un précurseur (P) tels que défini dans l'une quelconque des revendications 1 à 8, qui comprend une étape (C) dans laquelle :

(C) on traite thermiquement ledit précurseur (P) à une température supérieure à 900°C, avantageusement d'au moins 1000°C.

**15.** Luminophore (L) comprenant des particules ayant un diamètre moyen compris entre 1,5 et 15 microns, typiquement entre 3 et 10 microns, ces particules comprenant :

- un coeur minéral non luminophore; et
- une coquille à base d'un phosphate mixte de lanthane et/ou cérium, éventuellement dopé par du terbium (LAP), à structure phosphate de lanthane, recouvrant de façon homogène le coeur minéral, sur une épaisseur supérieure ou égale à 300 nm, typiquement comprise entre 0,3 et 1 micron.

**16.** Luminophore (L) selon la revendication 15, où le coeur minéral présente une surface spécifique est d'au plus 1 $m^2/g$, plus particulièrement d'au plus 0,6 $m^2/g$.

**17.** Luminophore (L) selon l'une des revendications 15 ou 16 où le phosphate mixte de la coquille répond à la formule (I) de la revendication 6.

**18.** Luminophore (L) selon l'une des revendications 15 ou 16 où le phosphate mixte de la coquille répond à la formule (Ib) ou (Ic) de la revendication 7.

**19.** Utilisation d'un luminophore selon l'une quelconque des revendications 15 à 18, pour fournir un effet de luminescence verte dans un système à plasma, par exemple un écran de visualisation ou un système d'éclairage, dans des dispositifs à excitation UV, notamment dans des lampes trichromatiques, notamment à vapeur de mercure, les lampes de rétro-éclairage de systèmes à cristaux liquides, les lampes à excitation Xenon, les dispositifs à excitation par diodes électroluminescentes et les systèmes de marquage à excitation UV.

**20.** Dispositif luminescent comprenant un luminophore (L) selon l'une des revendications 15 à 18 à titre de source de luminescence verte.

## Patentansprüche

**1.** Leuchtstoffvorläufer (P), umfassend Partikel mit einem mittleren Durchmesser zwischen 1,5 und 15 Mikron, wobei diese Partikel umfassen:

- einen Nicht-Leuchtstoff-Mineralkern;
- einen Mantel auf der Basis eines gemischten Lanthan- und/oder Cerphosphats, gegebenenfalls dotiert mit Terbium, der in homogener Weise den Mineralkern in einer Dicke größer oder gleich 300 nm bedeckt.

**2.** Leuchtstoffvorläufer nach Anspruch 1, wobei der Mantel auf der Basis eines gemischten Lanthan- und/oder Cerphosphats, gegebenenfalls dotiert mit Terbium, den Mineralkern in einer Dicke zwischen 0,3 und 1 Mikron, beispielsweise zwischen 0,5 und 0,8 Mikron, bedeckt.

**3.** Vorläufer nach Anspruch 1 oder 2, wobei der Nicht-Leuchtstoff-Mineralkern basiert auf:

- einem Lanthanphosphat; oder
- einem Borat der Formel $YBO_3$ oder $GdBO_3$.

**4.** Leuchtstoffvorläufer nach Anspruch 1 oder 2, wobei der Mineralkern der Partikel des Vorläufers (P) im Wesentlichen aus einem Lanthanphosphat $LaPO_4$ besteht.

**5.** Leuchtstoffvorläufer nach einem der vorhergehenden Ansprüche, wobei der Mineralkern der Partikel durch die Salzschmelztechnik verdichtet wurde.

**6.** Leuchtstoffvorläufer nach einem der vorhergehenden Ansprüche, wobei das gemischte Phosphat des Mantels die folgende allgemeine Formel (I) aufweist:

$$La_{(1-x-y)}Ce_xTb_yPO_4 \qquad (I),$$

wobei:

x zwischen einschließlich 0 und 0,95 liegt;
y zwischen einschließlich 0,05 und 0,3 liegt; und

die Summe (x+y) kleiner oder gleich 1 ist.

7. Leuchtstoffvorläufer nach einem der vorhergehenden Ansprüche, wobei das gemischte Phosphat des Mantels die folgende allgemeine Formel (Ib) aufweist:

$$La_{(1-y)}Tb_yPO_4 \qquad (Ib),$$

wobei:

y zwischen einschließlich 0,05 und 0,3 liegt;

oder auch die folgende Formel (Ic):

$$La_{(1-y)}Ce_yPO_4 \qquad (Ic),$$

wobei:

y zwischen einschließlich 0,01 und 0,3 liegt.

8. Leuchtstoffvorläufer nach einem der vorhergehenden Ansprüche, wobei der Mineralkern eine spezifische Oberfläche von höchstens 1 $m^2/g$, bevorzugter höchstens 0,6 $m^2/g$, aufweist.

9. Verfahren zur Herstellung eines Leuchtstoffvorläufers (P) nach einem der Ansprüche 1 bis 8, umfassend die folgenden aufeinanderfolgenden Schritte (A) und (B), in denen:

(A) eine wässrige Lösung (s) löslicher Salze von Lanthan und/oder Cer, und gegebenenfalls Terbium, in progressiver und kontinuierlicher Weise, und unter Rühren, einem wässrigen Medium (m) zugesetzt wird, das einen anfänglichen pH ($pH^0$) von 1 bis 5 aufweist und anfänglich umfasst:

- Partikel ($p^0$) auf der Basis eines Nicht-Leuchtstoff-Mineralmaterials, im dispergierten Zustand; und
- Phosphationen, wobei der pH des Reaktionsmediums während der Ausfällungsreaktion des gemischten Phosphats, die folgt, mit Variationen des pH von höchstens 0,5 pH-Einheiten auf einem im Wesentlichen konstanten Wert gehalten wird,

wobei Partikel erhalten werden, die einen Kern auf der Basis eines Nicht-Leuchtstoff-Mineralmaterials umfassen, auf dessen Oberfläche ein gemischtes Phosphat von Lanthan und/oder Cer, und gegebenenfalls Terbium, abgeschieden ist, anschließend
(B) die erhaltenen Partikel vom Reaktionsmedium getrennt werden, und diese bei einer Temperatur von 400 bis 900°C, vorzugsweise mindestens 600°C, wärmebehandelt werden.

10. Verfahren nach Anspruch 9, wobei die Partikel ($p^0$) Partikel auf der Basis von nicht dotiertem Lanthanphosphat sind.

11. Verfahren nach einem der Ansprüche 9 oder 10, wobei, in Schritt (A), die Phosphationen anfänglich in der Mischung (m) in Form von Ammoniumphosphaten vorliegen.

12. Verfahren nach einem der Ansprüche 9 bis 11, wobei, in Schritt (A), die Phosphationen im stöchiometrischen Überschuss in das Medium (m) mit einem anfänglichen Molverhältnis Phosphat/(La+Ce+Tb) von mehr als 1, vorzugsweise zwischen 1,1 und 3, eingebracht werden.

13. Verfahren nach einem der Ansprüche 9 bis 12, wobei der Schritt (A) außerdem einen Reifungsschritt am Ende des Zusatzes der gesamten Lösung (s) und vor dem Schritt (B) umfasst.

**14.** Verfahren zur Herstellung eines Leuchtstoffs (L) aus einem Vorläufer (P), wie in einem der Ansprüche 1 bis 8 definiert, welches einen Schritt (C) umfasst, in dem:

(C) der Vorläufer (P) bei einer Temperatur von mehr als 900°C, vorzugsweise mindestens 1000°C, wärmebehandelt wird.

**15.** Leuchtstoff (L), umfassend Partikel mit einem mittleren Durchmesser zwischen 1,5 und 15 Mikron, typischwerweise zwischen 3 und 10 Mikron, wobei diese Partikel umfassen:

- einen Nicht-Leuchtstoff-Mineralkern; und
- einen Mantel auf der Basis eines gemischten Lanthan- und/oder Cerphosphats, gegebenenfalls dotiert mit Terbium (LAP), mit einer Lanthanphosphatstruktur, der in homogener Weise den Mineralkern in einer Dicke größer oder gleich 300 nm, typischerweise zwischen 0,3 und 1 Mikron, bedeckt.

**16.** Leuchtstoff (L) nach Anspruch 15, wobei der Mineralkern eine spezifische Oberfläche ist von höchstens 1 $m^2/g$, bevorzugter höchstens 0,6 $m^2/g$, aufweist.

**17.** Leuchtstoff (L) nach einem der Ansprüche 15 oder 16, wobei das gemischte Phosphat des Mantels die Formel (I) von Anspruch 6 aufweist.

**18.** Leuchtstoff (L) nach einem der Ansprüche 15 oder 16, wobei das gemischte Phosphat des Mantels die Formel (Ib) oder (Ic) von Anspruch 7 aufweist.

**19.** Verwendung eines Leuchtstoffs nach einem der Ansprüche 15 bis 18, zum Bewirken eines grünen Lumineszenzeffekts in einem Plasmasystem, beispielsweise einem Visualisierungsbildschirm oder einem Beleuchtungssystem, in UV-Anregungssystemen, insbesondere in trichromatischen Lampen, insbesondere mit Quecksilberdampf, Hintergrundlampen von Flüssigkristallsystemen, Xenon-Anregungslampen, Vorrichtungen mit einer Anregung durch Elektroluminieszenzdioden und Systemen zur UV-Anregungsmarkierung.

**20.** Lumineszenzvorrichtung, umfassend einen Leuchtstoff (L) nach einem der Ansprüche 15 bis 18 als grüne Lumineszenzquelle.

## Claims

**1.** Phosphor precursor (P) comprising particles having an average diameter between 1.5 and 15 microns, these particles comprising:

- a non-phosphor mineral core;
- a shell based on a mixed phosphate of lanthanum and/or cerium, optionally doped with terbium, homogeneously covering the mineral core over a thickness greater than or equal to 300 nm.

**2.** Phosphor precursor according to Claim 1, where the shell based on a mixed phosphate of lanthanum and/or cerium, optionally doped with terbium covers the mineral core over a thickness between 0.3 and 1 micron, for example between 0.5 and 0.8 micron.

**3.** Phosphor precursor according to Claim 1 or 2, in which the non-phosphor mineral core is based on:

- a lanthanum phosphate; or
- a borate of formula $YBO_3$ or $GdBO_3$.

**4.** Phosphor precursor according to Claim 1 or 2, where the mineral core of the particles of the precursor (P) is mainly composed of a lanthanum phosphate $LaPO_4$.

**5.** Phosphor precursor according to one of the preceding Claims, where the mineral core of the particles has been densified by the technique of molten salts.

**6.** Phosphor precursor according to one of the preceding claims, where the mixed phosphate of the shell corresponds to the general formula (I) below:

$$La_{(1-x-y)}Ce_xTb_yPO_4 \qquad (I)$$

in which:

x is between 0 and 0.95 inclusive;
y is between 0.05 and 0.3 inclusive; and

the sum (x+y) is less than or equal to 1.

7. Phosphor precursor according to one of the preceding claims, where the mixed phosphate of the shell corresponds to the general formula (Ib) below:

$$La_{(1-y)}Tb_yPO_4 \qquad (Ib)$$

in which:

y is between 0.05 and 0.3 inclusively

or corresponds to the following formula (Ic):

$$La_{(1-y)}Ce_yPO_4 \qquad (Ic)$$

in which:

y is between 0.01 and 0.3 inclusive.

8. Phosphor precursor according to one of the preceding claims, where the mineral core has a specific surface area of at most 1 $m^2$/g, more particularly at most 0.6 $m^2$/g.

9. Process for preparing a phosphor precursor (P) according to any one of Claims 1 to 8, comprising the successive steps (A) and (B) below, in which:

(A) an aqueous solution (s) of soluble lanthanum and/or cerium, and optionally terbium, salts is gradually and continuously added, with stirring, to an aqueous medium (m) having an initial pH ($pH^0$) of 1 to 5 and initially comprising:

- particles ($p^0$) based on a non-phosphor mineral material, in the dispersed state; and
- phosphate ions, while maintaining the pH of the reaction medium at an approximately constant value during the precipitation reaction of the mixed phosphate which ensues, with variations in the pH of at most 0.5 pH units,

whereby particles are obtained that comprise a core based on a non-phosphor mineral material, deposited at the surface of which is a mixed phosphate of lanthanum and/or cerium, and optionally terbium, then
(B) the particles obtained are separated from the reaction medium, and are heat-treated at a temperature of 400 to 900°C, preferably at least equal to 600°C.

10. Process according to Claim 9, where the particles ($p^0$) are particles based on undoped lanthanum phosphate.

11. Process according to either of Claims 9 and 10, where, in step (A), the phosphate ions are initially present in the mixture (m) in the form of ammonium phosphates.

12. Process according to any one of Claims 9 to 11, where, in step (A), the phosphate ions are introduced in a stoichiometric excess into the medium (m), with an initial phosphate/(La+Ce+Tb) molar ratio greater than 1, preferably between 1.1 and 3.

13. Process according to any one of Claims 9 to 12, where step (A) comprises, in addition, a maturing step, at the end of the addition of all of the solution (s) and prior to step (B).

14. Process for preparing a phosphor (L) from a precursor (P) as defined in any one of Claims 1 to 8, which comprises a step (C) in which:

(C) said precursor (P) is heat-treated at a temperature above 900°C, advantageously of at least 1000°C.

15. Phosphor (L) comprising particles having an average diameter between 1.5 and 15 microns, typically between 3 and 10 microns, these particles comprising:

- a non-phosphor mineral core; and
- a shell based on a mixed phosphate of lanthanum and/or cerium, optionally doped with terbium (LAP), having a lanthanum phosphate structure, homogeneously covering the mineral core, over a thickness greater than or equal to 300 nm, typically between 0.3 and 1 micron.

16. Phosphor (L) according to Claim 15, where the mineral core has a specific surface area is of at most 1 $m^2$/g, more particularly at most 0.6 $m^2$/g.

17. Phosphor (L) according to either of Claims 15 and 16, where the mixed phosphate of the shell corresponds to the formula (I) from Claim 6.

18. Phosphor (L) according to either of Claims 15 and 16, where the mixed phosphate of the shell corresponds to the formula (Ib) or (Ic) from Claim 7.

19. Use of a phosphor according to any one of Claims 15 to 18, to provide a green luminescence effect in a plasma system, for example a display screen or a lighting system, in UV excitation devices, especially in trichromatic lamps, especially mercury vapour trichromatic lamps, lamps for backlighting liquid crystal systems, xenon excitation lamps, devices for excitation by light-emitting diodes and UV excitation marking systems.

20. Luminescent device comprising a phosphor (L) according to one of Claims 15 to 18, as a source of green luminescence.

FIG.1

FIG.2

FIG.3

FIG.4

## FIG.5

## FIG.6

## FIG.7

## FIG. 9

FIG.8

## RÉFÉRENCES CITÉES DANS LA DESCRIPTION

**Documents brevets cités dans la description**

- JP 62007785 B
- WO 8204438 A
- JP 62089790 B
- JP 59179578 B
- JP 62000579 B
- JP 57023674 B
- JP 60090287 B

- JP 62218477 B
- US 3507804 A
- EP 581621 A
- WO 9414920 A
- EP 1473347 A1
- EP 0581621 A

**Littérature non-brevet citée dans la description**

- **PRALINE ; COLL.** *Journal of Electron Spectroscopy and Related Phenomena,* 1981, vol. 21, 17-30